# EUROPÄISCHE PATENTSCHRIFT

(11) **EP 3 231 552 B1**
(45) Veröffentlichungstag und Bekanntmachung des Hinweises auf die Patenterteilung: **17.07.2019**
(21) Anmeldenummer: 17159894.9
(22) Anmeldetag: 08.03.2017
(51) Int. Cl.: B23Q 7/14

(54) **WERKSTÜCKPOSITIONIERVORRICHTUNG FÜR EIN BEARBEITUNGSZENTRUM, BEARBEITUNGSZENTRUM UND VERFAHREN**
WORKPIECE POSITIONING DEVICE FOR A MACHINING CENTRE, MACHINING CENTRE AND METHOD
DISPOSITIF DE POSITIONNEMENT DE PIÈCES POUR UN CENTRE D'USINAGE, CENTRE D'USINAGE ET PROCÉDÉ

(30) Priorität: 14.04.2016 DE 102016106935
(43) Veröffentlichungstag der Anmeldung: 18.10.2017
(73) Patentinhaber: F. Zimmermann GmbH, 73765 Neuhausen (DE)
(72) Erfinder: Podiebrad, Christian, 88250 Weingarten (DE); Demlang, Daniel, 72829 Engstingen (DE)
(74) Vertreter: Rüger Abel

(56) Entgegenhaltungen:
- EP-A2- 0 062 267
- EP-A2- 0 901 880

## Beschreibung

Die vorliegende Erfindung betrifft eine Werkstückpositioniervorrichtung für ein Bearbeitungszentrum, insbesondere ein Horizontalbearbeitungszentrum, ein Bearbeitungszentrum mit einer derartigen Werkstückpositioniervorrichtung und ein Verfahren zur Positionierung eines Werkstücks in einem Bearbeitungszentrum.

Insbesondere für die Großteilebearbeitung, wie bspw. beim Werkzeug-, Formen- und Modellbau oder bei der Produktion in der Automobil-, Luft- und Raumfahrtindustrie und in vergleichbaren Anwendungen, in denen komplexe Oberflächen an großen Werkstücken mit hoher Oberflächengüte und Bearbeitungsgeschwindigkeit erzeugt werden sollen, ist es üblich, Werkstückrohteile auf eine Palette aufzuspannen und einzurichten und anschließend die Werkstückpalette mit dem Werkstück der Bearbeitungseinheit einer Werkzeugmaschine bzw. einer Bearbeitungsstation eines Bearbeitungszentrums zur Bearbeitung zuzuführen. Nach der Bearbeitung wird die Werkstückpalette mit dem bearbeiteten Werkstück wieder aus der Bearbeitungseinheit bzw. -station entfernt und zu einem dafür vorgesehenen Ablageplatz befördert. Es werden unterschiedliche Transportsysteme, insbesondere motorangetriebene Linearachsen, dazu verwendet, die Werkstückpaletten zwischen einem Rüstplatz, einem Bearbeitungsplatz und etwaigen Ablageplätzen zu transportieren und zu positionieren.

Insbesondere bei Horizontalbearbeitungsmaschinen oder in Horizontalbearbeitungszentren mit einer horizontal gehalterten, im Raum bewegbaren und in beliebigen Drehlagen festlegbaren Bearbeitungsspindel, z.B. Frässpindel, muss die Palette mit dem Werkstück von einer horizontalen Stellung auf einer Ablage eines Rüstplatzes oder eines Pufferplatzes aus in eine vertikale Stellung umgesetzt werden, die dann der Bearbeitungsposition entspricht oder in diese verschoben wird. Hierzu ist eine Palettenschwenk- oder -dreheinrichtung erforderlich, die die Verdrehung bzw. Verschwenkung der Palette von der Horizontalstellung in die Vertikalstellung und umgekehrt bewerkstelligt. Zu diesem Zweck werden herkömmlicherweise z.B. Palettendreheinrichtungen mit zwei drehbaren Greifarmen oder auf Basis von Pneumatik- oder Hydraulikzylindern eingesetzt. Bei sehr großen und schweren Werkstücken, die eine entsprechende robuste Werkstückpalette als Träger bedingen, kann die Masse der Palette mit dem Werkstück mehrere Tonnen, bspw. bis zu 10 Tonnen oder sogar mehr, betragen. Die räumliche Dimension der Palette mit dem Werkstück kann ebenfalls enorm sein. Eine entsprechende Palettendreh- oder -schwenkeinrichtung muss folglich äußerst groß und robust ausgelegt sein und sehr große Drehmomente liefern können. Bei der vorstehend angegebenen Masse der Werkstückpalette können Drehmomente im Bereich von 30.000 bis 40.000 Nm auf jeder Seite der Palette erforderlich sein.

Eine derartige Palettendreh- oder -schwenkeinrichtung kann äußerst schwer zu realisieren und sehr kostspielig sein. Ferner muss die Werkstückpalette häufig zusätzlich durch eine Linearbewegung in die Bearbeitungsstation hinein beschickt oder daraus entfernt werden und gegebenenfalls für die geeignete Bearbeitungs- oder Lagerungsposition angehoben bzw. abgesenkt werden, so dass zusätzlich zu der Dreh- oder Schwenkeinrichtung motorangetriebene Linearachsen erforderlich sind. Für die Großteilebearbeitung ergibt dies sehr komplizierte, sperrige und eine große Standfläche erfordernde sowie schwer zu handhabbare hybride Transport- und Positioniervorrichtungen, die entsprechend hohe Kosten für die Anschaffung und Instandhaltung nach sich ziehen.

EP 0 901 880 A2 beschreibt eine Vorrichtung und ein Verfahren zur Positionierung eines auf einer Palette angeordneten Werkstücks zwischen einem Magazin und einem Arbeitsbereich einer Werkzeugmaschine, mit einer Ablage, die eine horizontale Ablagefläche für die Palette aufweist, und mit einer Schwenkeinrichtung zur Umsetzung der Palette von einer Horizontalstellung in eine Vertikalstellung und umgekehrt. Die Schwenkeinrichtung ist dazu eingerichtet, die Palette an einem Rand mittels eines Greiforgans zu ergreifen und durch Verfahren des Greiforgans in horizontaler und vertikaler Richtung die Palette auf einer Kreisbahn um eine auf der Ablage liegende Kante der Palette herum zu verschwenken. Damit kann die Palette in horizontaler Stellung auf der Ablage abgelegt und bedarfsweise in eine Vertikalstellung gekippt werden, um bspw. in dem Werkstück bei der Bearbeitung verbliebene Flüssigkeit zu entleeren. Die Positioniereinrichtung ist ferner eingerichtet, um die Palette in deren Horizontalstellung in vertikaler und horizontaler Richtung zwischen dem Magazin und dem Arbeitsbereich zu transportieren.

Ausgehend hiervon ist es Aufgabe der Erfindung, die Nachteile des Standes der Technik zu überwinden und eine neue Werkstückpositioniervorrichtung für ein Bearbeitungszentrum zu schaffen, die sich insbesondere zur Großteilebearbeitung, einschließlich in Horizontalbearbeitungszentren, eignet. Insbesondere ist es eine Aufgabe der vorliegenden Erfindung, eine Werkstückpositioniervorrichtung, ein Bearbeitungszentrum und ein Verfahren zur Positionierung eines Werkstücks in einem Bearbeitungszentrum zu schaffen, die eine Positionierung von Werkstücken, insbesondere Großteilen, unter Verschwenkung derselben mit einfachen Mitteln ermöglichen.

Diese Aufgabe wird durch die Werkstückpositioniervorrichtung für ein Bearbeitungszentrum mit den Merkmalen des Anspruchs 1, ein Bearbeitungszentrum nach Anspruch 15 und ein Verfahren zur Positionierung eines auf einer Werkstückpalette aufgespannten Werkstücks in einem Bearbeitungszentrum nach Anspruch 18 gelöst. Besonders vorteilhafte Ausführungsformen der Erfindung sind Gegenstand der Unteransprüche.

Die Werkstückpositioniervorrichtung weist eine Ablage, die eine horizontale Ablagefläche für eine Werkstückpalette und ein Drehlager aufweist, das eingerichtet ist, um die Werkstückpalette an einem ersten Rand derselben drehbar aufzunehmen, und eine Schwenkeinrichtung zur Umsetzung einer Werkstückpalette von einer Horizontalstellung in eine Vertikalstellung und umgekehrt auf. Die Schwenkeinrichtung ist dazu eingerichtet, eine Werkstückpalette an einem anderen, zweiten Rand zu ergreifen, und durch gleichzeitiges Verfahren einer horizontalen und einer vertikalen Linearachse den zweiten Rand der Werkstückpalette auf einer Kreisbahn um das Drehlager herum zu verschwenken, um die Werkstückpalette in horizontaler Stellung auf der Ablage abzulegen bzw. sie in eine Vertikalstellung zu überführen. Die Werkstückpositioniervorrichtung ist eingerichtet, um die Werkstückpalette in deren Vertikalstellung mittels der vertikalen Linearachse in vertikaler Richtung von dem Drehlager der Ablage abzuheben und auf dieses abzusenken sowie mittels der horizontalen Linearachse in horizontaler Richtung zu transportieren.

Die Werkstückpositioniervorrichtung sieht also ein Drehlager an einer Ablage, in dem die Werkstückpalette drehbar abgelegt bzw. gelagert werden kann, und eine Schwenkeinrichtung vor, die eine horizontale und vertikale Linearachse zur Verschwenkung der Werkstückpalette nutzt. Die horizontale und die vertikale Linearachse werden in kombinierter, aufeinander abgestimmter Weise derart angesteuert bzw. verfahren, dass die Palette auf einem Kreisbogen bzw. Kreissegment, insbesondere einem Viertelkreis um 90° um das Drehlager herum in einem Drehsinn, um die Werkstückpalette vertikal aufzurichten, oder in dem entgegengesetzten Drehsinn, um die Werkstückpalette in die Horizontalstellung abzusenken, verschwenkt werden kann. Das Drehlager stützt die Palette an ihrem ersten Rand ab und lagert und führt sie bei der Schwenkbewegung. Für die Verschwenkung werden vorteilhafterweise lediglich die angetriebenen Linearachsen verwendet, die meist ohnehin zur Beschickung und Entfernung von Werkstückpaletten oder für deren Transport zwischen Rüst-, Puffer- und Bearbeitungsstationen vorgesehen sind. Außerdem können derartige Linearachsen ohne Weiteres äußerst robust und ausreichend kraftvoll ausgeführt werden, um auch Großteile vertikal und horizontal zu bewegen oder in der erfindungsgemäßen Weise zu verschwenken.

Die Schwenkeinrichtung kann somit wenigstens eine horizontale Linearachse mit einem durch einen Motor angetriebenen horizontalen Schlitten, der für eine Beschickung und Entnahme der Werkstückpalette zu einer Bearbeitungsstation des Bearbeitungszentrums hin bzw. von diesem weg in der Lage ist, und eine vertikale Linearachse mit einem durch einen Motor angetriebenen vertikalen Schlitten enthalten, der in der Lage ist, eine Werkstückpalette in vertikaler Richtung anzuheben und abzusenken. Die Schlitten können direkt angetrieben oder durch einen Motor über ein Getriebe, z.B. ein Kettengetriebe oder dgl., angetrieben sein. Die Linearachsen können Teil einer Transporteinrichtung sein, die auch eine weitere, zu der ersten horizontalen Linearachse senkrechte zweite horizontale Linearachse aufweisen kann, um Werkstückpaletten in allen drei Raumrichtungen bewegen und zwischen beliebigen Stationen transportieren zu können.

Die Bewegung der Linearachsen kann durch eine Steuerung der Bearbeitungsmaschine gesteuert sein. Insbesondere kann die Steuerung die horizontale und die vertikale Linearachse derart ansteuern, dass der Bewegungsweg einer der Linearachsen im Zeitverlauf einer Kosinusfunktion folgt, während der Bewegungsweg der anderen Linearachse im Zeitverlauf einer Sinusfunktion folgt. Dies ergibt die gewünschte Bewegung auf der Kreisbahn.

In einer besonders bevorzugten Ausführungsform ist die Bewegung der Linearachsen durch eine CNC-Steuerung des Bearbeitungszentrums gesteuert. Ein Steuerprogramm für eine Verschwenkung auf einer Kreisbahn ist im Allgemeinen als eine Funktionalität der CNC-Steuerung zum entsprechenden Bewegen eines Werkzeugs bei der Bearbeitung integriert. Diese Funktionalität kann mit geringem Aufwand angepasst und für den Zweck der Verschwenkung der Werkstückpalette genutzt werden. Der Programmier- und gesamte Realisierungsaufwand, um diese Lösung zu ermöglichen, ist relativ gering.

Das Drehlager der Ablage ist vorzugsweise geeignet eingerichtet, damit die Werkstückpalette relativ schnell und einfach darin abgelegt und drehbar gelagert werden kann. In einer vorteilhaften Ausführungsform weist das Drehlager eine Klaue auf, die auf der horizontalen Ablagefläche oder an einer Seite der Ablage angeordnet und in Einsatzstellung nach oben geöffnet ist, um eine vorzugsweise kreis- oder V-förmige Drehlagerfläche zu definieren. Die Drehlagerfläche dient der drehbaren Aufnahme eines entsprechenden Drehlagerelementes, das an der Werkstückpalette vorgesehen ist.

In einer Ausführungsform weist die Klaue des Drehlagers einen ersten und einen zweiten Klauenfinger auf, die aus der horizontalen Ablagefläche der Ablage vorragen und zwischeneinander die kreisförmige Drehlagerfläche definieren. Dabei ragt der an einem Rand der Ablage näher gelegene Klauenfinger vorzugsweise weiter aus der horizontalen Ablagefläche heraus als der von dem Rand weiter entfernte Klauenfinger. Eine derartige Konfiguration ergibt einen Anschlag für die Palette, wenn diese positioniert und auf der Ablage abgelegt wird, und schafft eine in Umfangsrichtung weitreichende, vollflächige Drehlagerung und -führung für die Verschwenkung, während der kurze Klauenfinger eine Verdrehung der Werkstückpalette in dem Drehlager bis zur Horizontalstellung ermöglicht bzw. diese nicht behindert.

Eine passend gestaltete Drehlagerfläche könnte auch z.B. vertieft in der horizontalen Ablagefläche ausgebildet sein, oder es können, wie bereits erwähnt, geeignete Klauen oder Drehlagerelemente an gegenüberliegenden Seiten der Ablage angeformt oder befestigt sein. Es sind unterschiedliche Gestaltungen für die Drehlager möglich.

Zur Wechselwirkung mit dem Drehlager weist die Werkstückpositionierung ferner wenigstens ein an einer Werkstückpalette vorgesehenes Lagerelement auf, das jeweils dazu eingerichtet ist, spielarm in dem Drehlager drehbar aufgenommen zu werden. Ein zu dem Drehlager passendes Lagerelement kann an der Werkstückpalette einstückig ausgebildet oder befestigt sein.

In einer vorteilhaften Ausführungsform ist das Lagerelement durch einen teilzylindrischen Bereich gebildet, der an einer sich an den ersten Rand anschließenden Seite einer Werkstückpalette ausgebildet ist. In einer weiteren Ausführungsform ist das Lagerelement durch einen aus einer Seitenfläche einer Werkstückpalette auskragenden zylindrischen Lagerzapfen gebildet. Der Außendurchmesser des teilzylindrischen Bereichs oder des Lagerzapfens ist passend zu den Innenmaßen der Drehlagerfläche des Drehlagers gewählt, entspricht z.B. einem Innendurchmesser einer gerundeten Drehlagerfläche des Drehlagers. Als einstückiger Teil der Werkstückpalette kann das Lagerelement sehr robust, verschleißarm ausgebildet sein, um auch ein sehr hohes Gewicht der Palette mit dem aufgespannten Werkzeug zu tragen. Es sind noch andere Gestaltungen für das Lagerelement, wie z.B. sphärische Bereiche an der Werkstückpalette, Lagerbolzen oder dgl., möglich.

Je nach der Anwendung und den Dimensionen der Werkstückpalette können eine einzige, längliche Drehlagerfläche an der Ablage und ein einziges hierzu passendes Lagerelement an der Werkstückpalette für die Drehlagerung ausreichen. Im Allgemeinen sind jedoch zwei oder mehrere derartiger Paare aus Lagerelement und Drehlager zur Abstützung und Lagerung vorgesehen, wobei die Lagerelemente im Abstand zueinander an dem ersten Rand der Werkstückpalette angeordnet sind, während die entsprechende Anzahl der Drehlager im Abstand zueinander an einem dem ersten Rand der Werkstückpalette zugeordneten Rand der Ablage vorgesehen sind. In einer bevorzugten Ausführungsform ist jeweils ein Paar aus Lagerelement und Drehlagerstelle an einer Ecke einer Längsseite der Palette und der Ablage vorgesehen.

In bevorzugten Ausführungsformen trägt die Werkstückpalette wenigstens ein Griffelement, und die Schwenkeinrichtung weist eine Greifeinrichtung auf, die dazu eingerichtet ist, das Griffelement in einer derartigen Weise zu ergreifen, dass eine relative Verdrehung zwischen dem Griffelement und der Greifeinrichtung möglich ist.

Das wenigstens eine Griffelement kann einfach durch einen an der Werkstückpalette vorgesehenen, vorzugsweise integral ausgebildeten oder daran befestigten, Griffbolzen gebildet sein, der in der Nähe des zweiten Randes der Werkstückpalette an einer Seitenfläche der Werkstückpalette auskragt. Der Griffbolzen kann insbesondere mit einer im Wesentlichen zylindrischen Außenfläche ausgebildet sein, die sich zum Ergreifen durch die Greifeinrichtung bei relativer Verdrehbarkeit eignet.

Es können andere Griffelemente, wie z.B. an der Werkstückpalette angebrachte Ösen, Griffstangen oder dgl., zum Ergreifen durch die Greifeinrichtung vorgesehen sein.

Die Greifeinrichtung kann einen Greifarm zum Ergreifen des Griffelementes der Werkstückpalette aufweisen. In einer bevorzugten Ausführungsform ist der Greifarm an einem Schlitten einer von der horizontalen und der vertikalen Linearachse, vorzugsweise an der vertikalen Achse, befestigt. Der Greifarm weist vorzugsweise eine wenigstens abschnittsweise gerundete Greiffläche auf, die das Griffelement der Werkstückpalette spielarm drehbar aufnimmt. Z.B. kann die gerundete oder kreisförmige Greiffläche des Greifarms einen Innenradius aufweisen, der dem Außenradius des zylindrischen Griffbolzens im Wesentlichen entspricht.

In einer besonders bevorzugten Ausführungsform weist die Greifeinrichtung ferner einen Anschlagblock auf, der vorzugsweise einstückig an dem den Greifarm tragenden Schlitten ausgebildet und angeordnet ist, um bei einer Verschwenkung der Werkstückpalette in eine Vertikalstellung mit der Palette in Anlage zu kommen. Der Anschlagblock fängt somit die Werkstückpalette bei der Verschwenkung in die Vertikalstellung auf, verhindert ein weiteres Verschwenken oder Schwingen der Palette beim Transport und hält die Palette in der präzisen vertikalen Stellung, gegebenenfalls auch bei der Bearbeitung. Dann kann das Werkstück auch während der Bearbeitung gegen die Bearbeitungskräfte der Bearbeitungsspindel gut abgestützt werden.

Gemäß einem weiteren Aspekt der Erfindung ist ein Bearbeitungszentrum zur Bearbeitung von Werkstücken, die auf einer Palette aufgespannt sind, geschaffen. Das Bearbeitungszentrum weist eine Bearbeitungsstation, die eine an einem Maschinenbett- oder -gestell bewegbar gelagerte und geführte Bearbeitungsspindel, insbesondere Frässpindel, aufweist, eine Rüststation zum Aufspannen von Werkstücken auf eine Werkstückpalette und/oder eine Pufferstation zur vorübergehenden Zwischenlagerung einer Werkstückpalette mit darauf aufgespanntem Werkstück und eine Werkstückpositioniervorrichtung auf, die wie oben beschrieben beschaffen und eingerichtet ist. Insbesondere ist die Werkstückpositioniervorrichtung dazu eingerichtet, die Werkstückpalette mit dem aufgespannten Werkstück während eines Transports zwischen einer von der Rüststation, der Pufferstation und der Bearbeitungsstation und einer anderen der Stationen von einer Horizontalstellung in eine Vertikalstellung oder umgekehrt umzusetzen. Die Ablage der Werkstückpositioniervorrichtung ist also bspw. Teil der Rüststation und/oder der Pufferstation und weist das Drehlager auf, während die horizontale und die vertikale Linearachse für einen Transport der Werkstückpalette in dem Bearbeitungszentrum, einschließlich der Beschickung und der Entfernung der Werkstückpalette zu bzw. aus der Bearbeitungsstation, sowie eine Verschwenkung der Werkstückpalette sorgen.

In einer besonders bevorzugten Ausführungsform ist das Bearbeitungszentrum ein Horizontalbearbeitungszentrum, bei dem die Bearbeitungsspindel in einer im Wesentlichen horizontalen Stellung an einem Maschinengestell gehaltert ist und Werkstücke auf der Werkstückpalette in horizontaler Stellung beladen und in vertikaler Stellung bearbeitet werden.

In Ausführungsformen kann das Bearbeitungszentrum, insbesondere das Horizontalbearbeitungszentrum, sowohl eine Rüststation mit einer Ablage als auch eine Pufferstation mit einer Ablage aufweisen, wobei die Werkstückpositionierung dazu eingerichtet sein kann, Werkstückpaletten in horizontaler Stellung auf den Ablagen der Rüststation und der Pufferstation abzulegen und in vertikaler Stellung zwischen der Rüststation, der Pufferstation und der Bearbeitungsstation zu transportieren. Dies kann einen Transport der Werkstücke mit wenigen, einfach gestalteten Komponenten in robuster, komplexarmer und platzsparender Weise ermöglichen.

Im Übrigen kann das Bearbeitungszentrum eine beliebige Ausführungsform der vorstehend beschriebenen Werkstückpositioniervorrichtung nutzen und von den damit erzielten Vorteilen ebenfalls profitieren.

In einem noch weiteren Aspekt der Erfindung ist ein Verfahren zur Positionierung eines auf einer Werkstückpalette aufgespannten Werkstücks in einem Bearbeitungszentrum geschaffen. Das Verfahren weist die Schritte auf: Vorsehen einer horizontalen und einer vertikalen Linearachse zum Transport einer Werkstückpalette in vertikaler und horizontaler Richtung; Ablegen der Werkstückpalette in horizontaler Stellung auf einer Ablage, so dass ein erster Rand der Werkstückpalette in einem Drehlager drehbar aufgenommen wird; Ergreifen der Werkstückpalette an einem anderen, zweiten Rand in einer relativ drehbaren Weise; gleichzeitiges Verfahren der horizontalen und der vertikalen Linearachse, um die Werkstückpalette auf einer Kreisbahn um das Drehlager herum zu verschwenken, während die Werkstückpalette in dem Drehlager drehbar gelagert ist, um die Werkstückpalette von einer Horizontalstellung in eine Vertikalstellung oder umgekehrt umzusetzen; Abheben der Werkstückpalette von dem Drehlager der Ablage oder Absenken der Werkstückpalette auf das Drehlager, während sich die Werkstückpalette in der Vertikalstellung befindet; und Transport der Werkstückpalette in horizontaler Richtung, während sich die Werkstückpalette in der Vertikalstellung befindet. Die Vorteile der erfindungsgemäßen Werkstückpositioniervorrichtung und des erfindungsgemäßen Bearbeitungszentrums kommen auch dem erfindungsgemäßen Verfahren zugute, und die oben erläuterten Ausführungsformen derselben können gemeinsam mit ihren Vorteilen analog auf das Verfahren angewandt werden. Das Verfahren muss nicht in der angegebenen Reihenfolge der Verfahrensschritte durchgeführt werden und kann weitere Verfahrensschritte aufweisen.

Weitere vorteilhafte Einzelheiten von Ausführungsformen der Erfindung ergeben sich aus den Unteransprüchen, der Zeichnung sowie der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:
Fig. 1 eine Perspektivansicht eines Horizontalbearbeitungszentrums zur Großteilefertigung in einer stark vereinfachten Darstellung;
Fig. 2 einen Ausschnitt aus dem Horizontalbearbeitungszentrum nach Fig. 1 unter Veranschaulichung von Komponenten einer Werkstückpositioniervorrichtung gemäß einer Ausführungsform der Erfindung, in stark schematisierter, prinziphafter Perspektivdarstellung;
Fig. 3 eine Ablage und eine Werkstückpallette zur Verwendung bei der Werkstückpositioniervorrichtung nach Fig. 2, in Seitenansicht, in stark schematisierter Prinzipdarstellung;
Fig. 4a-4f Schaubilder, die den Ablauf der Positionierung einer Werkstückpallette mit aufgespanntem Werkstück zwischen der Ablage und einer Bearbeitungsposition, wie sie in Fig. 3 veranschaulicht sind;
Fig. 5 eine Seitenansicht eines Horizontalbearbeitungszentrums zur Großteilebearbeitung mit einer Werkstückpositioniervorrichtung gemäß einer weiteren Ausführungsform der Erfindung, in einer vereinfachten Darstellung;
Fig. 6a-6g das Horizontalbearbeitungszentrum nach Fig. 5 unter Veranschaulichung des Ablaufs der Positionierung von Werkstückpalletten vor und nach der Bearbeitung, in vereinfachten, ausschnittsweisen Darstellungen; und
Fig. 7 ein Flussdiagramm eines Verfahrens zur Positionierung eines auf einer Werkstückpallette aufgespannten Werkstücks in einem Bearbeitungszentrum gemäß einer Ausführungsform der Erfindung, in stark vereinfachter Form.

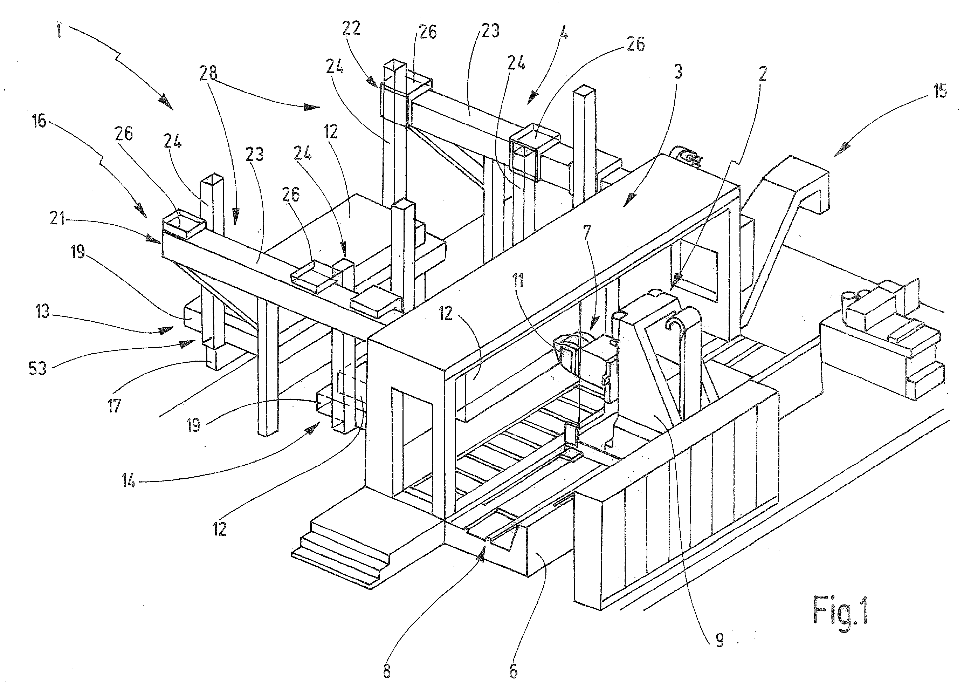

Fig. 1 zeigt in einer stark vereinfachten Perspektivdarstellung ein Horizontalbearbeitungszentrum 1, das sich zur Bearbeitung von Teilen, insbesondere von Großteilen, eignet, wie sie z.B. beim Werkzeug-, Formen- und Modellbau oder bei der Produktion für Kraftfahrzeuge und Flugzeuge gefertigt oder bearbeitet werden. Prinzipiell kann die Erfindung aber in einem beliebigen Bearbeitungszentrum 1 bzw. einer beliebigen Bearbeitungsmaschine verwendet werden, bei dem bzw. der es erforderlich oder gewünscht ist, ein Werkstück, das auf einer Palette oder einem sonstigen Werkstückträger aufgespannt ist, vor, während oder nach der Bearbeitung zwischen einer ersten Position und einer anderen, zweiten Position zu transferieren und insbesondere zwischen einer Horizontalstellung und einer Vertikalstellung umzusetzen.

Wie aus Fig. 1 ersichtlich, weist das Bearbeitungszentrum 1 eine Bearbeitungsstation 2, einen Arbeitsraum 3 und ein Handhabungssystem 4 auf. Die Bearbeitungsstation 2 weist eine auf einem Maschinenbett 6 bewegbar gelagerte Bearbeitungseinheit 7 auf, die insbesondere eine Fräseinheit sein kann. Die Bearbeitungseinheit 7 ist auf in Fig. 1 angedeuteten Längsführungen 8 längs des Maschinenbetts 6 in horizontaler Richtung verschiebbar gelagert und geführt. Die Bearbeitungseinheit 7 weist ein Maschinengestell bzw. eine Säule 9 auf, die in einer weiteren horizontalen Richtung senkrecht zu der ersten horizontalen Richtung auf den Arbeitsraum 3 zu und von diesem Weg linear verschiebbar gelagert und geführt ist. Die Säule 9 trägt eine Bearbeitungsspindel 11, z.B. eine Frässpindel, die an der Säule 9 in vertikaler Richtung verschiebbar gelagert und in horizontaler Lage gehalten ist. Die Bearbeitungsspindel 11 ragt somit mit ihrer Längserstreckung in Richtung auf den Arbeitsraum 3 vor und trägt an ihrem freien Ende ein hier nicht näher dargestelltes Bearbeitungswerkzeug, z.B. Fräswerkzeug, zur Bearbeitung eines Werkstücks 12. Die Bearbeitungsspindel 11 kann weitere Dreh-, Schwenk- und/oder Bearbeitungsachsen aufweisen, wie dies allgemein bekannt ist.

Wie aus Fig. 1 ersichtlich, ist das Werkstück 12 in dem Arbeitsraum 3 in vertikaler Stellung gehalten, um von der Bearbeitungsspindel 11 bearbeitet zu werden. Durch die vertikale Bearbeitungsposition können vorteilhafterweise Späne bei der Bearbeitung des Werkstücks 12 zum Boden des Arbeitsraums 3 fallen und durch einen hier angedeuteten Späneförderer 15 leicht wegbefördert werden.

Zur Bereitstellung des Werkstücks 12, zur Beschickung des Werkstücks 12 in den Arbeitsraum und zum Entfernen desselben aus dem Arbeitsraum 3 ist das Handhabungssystem 4 vorgesehen. Dieses umfasst in der in Fig. 1 dargestellten beispielhaften Ausführungsform des Bearbeitungszentrums 1 eine Rüststation 13, eine Pufferstation 14 und ein Linearachsensystem 16.

Die Rüststation 13 weist eine Ablage 17 auf, die durch einen Ablagetisch oder einen speziell eingerichteten Ablagebereich des Fundaments gebildet sein kann. Die Ablage 17 weist eine ebene und im Wesentlich horizontal ausgerichtete Ablagefläche 18 auf, auf der eine Werkstückpalette 19 positioniert werden kann, die das Werkstück 12 für die Bearbeitung aufnimmt. Die Verwendung einer Werkstückpalette 19 als Träger für das Werkstück 12 für den Transport und die Bearbeitung in dem Bearbeitungszentrum 1 ist insbesondere bei Großteilen mit großen Dimensionen und hohem Gewicht von Vorteil.

Die Werkstückpalette 19 ist hier durch einen im Wesentlichen quaderförmigen Körper gebildet, prinzipiell aber an keine spezielle Form beschränkt. Die Werkstückpalette 19 weist eine hier nicht näher bezeichnete ebene Unterseite auf, die flächig auf der Ablagefläche 18 platziert werden kann. Auf der Oberseite der Werkstückpalette 19 wird das Werkstück 12 in der Rüststation 13 positioniert und für die Bearbeitung passend vorbereitet und fixiert. Das Werkstück 12 ist in Fig. 1 ebenfalls durch einen im Wesentlichen quaderförmigen Körper dargestellt, kann aber ein beliebiges kubisches, rotationssymmetrisches oder in sonstiger Weise gestaltetes Werkstück sein.

Neben der Rüststation 13 ist vorzugsweise, jedoch nicht notwendigerweise ferner die Pufferstation 14 vorgesehen, die einer Zwischenlagerung des in der Rüststation 13 eingerichteten und auf die Werkstückpalette 19 aufgespannten Werkstücks 12 dient, bevor dieses in den Arbeitsraum beschickt und dort bearbeitet wird wie auch danach. Die Pufferstation 14 oder mehrere derartige Pufferstationen 14 ermöglichen es, Werkstücke 12 dem Arbeitsraum 3 zuzuführen, in diesem zu bearbeiten oder von diesem zu entfernen, während andere Werkstücke gleichzeitig in der Rüststation 13 eingerichtet werden, was zu einer Verkürzung der gesamten Bearbeitungszeiten beitragen kann. Die Pufferstation 14 kann in gleicher Weise wie die Rüststation 13 mit einer hier nicht näher dargestellten Ablage in Form eines Ablagetisches oder eines an dem Fundament speziell eingerichteten Ablagebereiches ausgebildet sein.

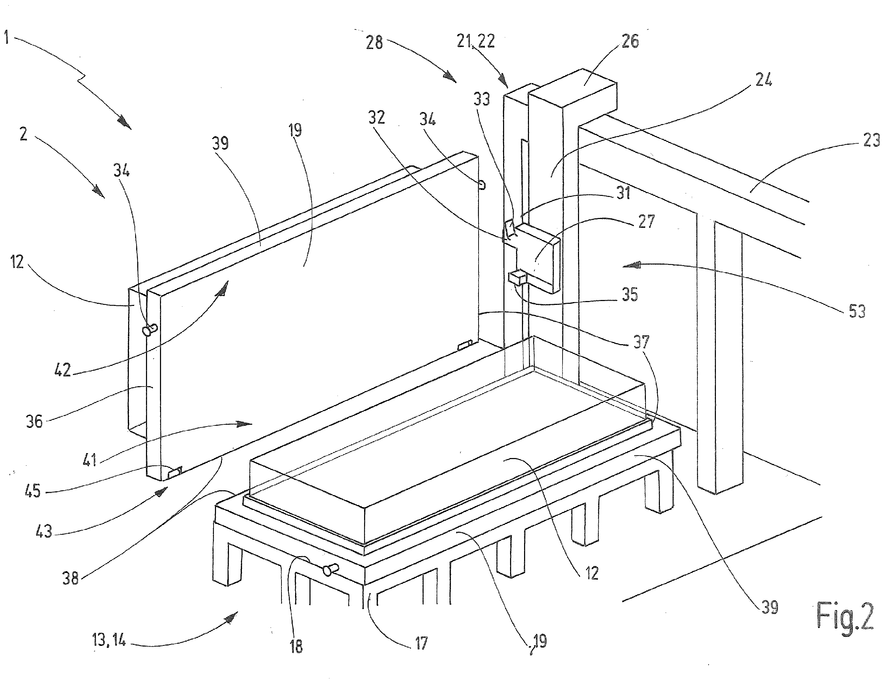

Zur Beschickung des auf der Werkstückpalette 19 aufgespannten Werkstücks 12 in den Arbeitsraum 3 und zum Entfernen desselben ist das Linearachsensystem 16 vorgesehen. Dieses umfasst eine erste und eine zweite Linearachsenanordnung 21, 22, die auf beiden Seiten der Rüststation 13 und der Pufferstation 14, betrachtet in Längsrichtung des Bearbeitungszentrums 1, parallel zueinander angeordnet sind. Die erste Linearachsenanordnung 21 und die zweite Linearachsenanordnung 22 sind im Wesentlichen identisch ausgebildet, und jede weist wenigstens eine horizontale Linearachse 23 und wenigstens eine vertikale Linearachse 24 auf. Jede Linearachse 23, 24 ist durch ein Modul gebildet, das einen durch einen hier nicht näher dargestellten Motor angetriebenen Schlitten oder ein sonstiges angetriebenes Element aufweist, das entlang der jeweiligen horizontalen bzw. vertikalen Achse verfahren werden kann. Bspw. ist in Fig. 1 ein Schlitten 26 der horizontalen Linearachse 23 exemplarisch dargestellt. Ein entsprechender Schlitten 27 der vertikalen Linearachse 24 ist in Fig. 2 schematisch angezeigt.

Die beiden Linearachsenanordnungen 21, 22 sind dazu eingerichtet, eine Werkstückpalette 19 von beiden Seiten zu ergreifen und in vertikaler Richtung sowie in horizontaler Richtung zu transportieren. Wie nachstehend in größeren Einzelheiten beschrieben, ermöglichen die Linearachsenanordnungen 21, 22 ferner eine Verschwenkung der Werkstückpalette 19, um sie von einer Horizontalstellung auf der Ablage 17 der Rüststation 13 oder der Pufferstation 14 in eine Vertikalstellung zur Bearbeitung in dem Arbeitsraum 3 und umgekehrt zu überführen.

Wie in Fig. 1 veranschaulicht, können an der horizontalen Linearachse 23 mehrere vertikale Linearachsen 24 angeordnet sein, um den Transport von Werkstückpaletten 19 von der Rüststation 13 zu der Pufferstation 14 sowie von der Pufferstation 14 zu dem Arbeitsraum 3 zu parallelisieren. Generell genügt aber eine einzige angetriebene horizontale Linearachse 23 und eine einzige angetriebene vertikale Linearachse 24 pro Linearachsenanordnung 21, 22, um eine Werkstückpositioniervorrichtung 28 zu schaffen, die es ermöglicht, Werkstückpaletten 19 in dem Bearbeitungszentrum 1 passend zu transportieren, in den Arbeitsraum 3 zuzustellen und von diesem zu entfernen.

Die Werkstückpositioniervorrichtung 28 ist in größeren Einzelheiten in Fig. 2 in einer stark schematisierten Darstellung veranschaulicht. Zu der Werkstückpositioniervorrichtung 28 gehört eine Ablage, die bspw. die Ablage 17 der in Fig. 1 dargestellten Rüststation 13 oder der Pufferstation 14 sein kann. Der Einfachheit und Übersichtlichkeit wegen ist in Fig. 2 lediglich ein Ablageplatz 17 dargestellt, der die Rüststation 13 oder die Pufferstation 14 repräsentieren kann. Zu der Werkstückpositioniervorrichtung 28 gehören ferner die erste und die zweite Linearachsenanordnung 21, 22, von denen in Fig. 2 lediglich eine Linearachsenanordnung 21 der Übersichtlichkeit wegen dargestellt ist. Wie ersichtlich, trägt die horizontale Linearachse 23 den in horizontaler Richtung verfahrbaren Schlitten 26, der die vertikale Linearachse 24 trägt, an der der vertikale Schlitten 27 angeordnet ist, der durch einen hier nicht näher dargestellten Motor angetrieben in vertikaler Richtung verfahrbar ist.

Der vertikale Schlitten 27 trägt eine Greifeinrichtung 31, die dazu eingerichtet ist, eine Werkstückpalette 19 zu ergreifen, um sie zu bewegen. Es sollte beachtet werden, dass prinzipiell auch eine umgekehrte Anordnung möglich wäre, bei der eine oder mehrere vertikale Linearachsen 24 eine horizontale Linearachse 23 tragen, deren Schlitten in horizontaler Richtung verfahrbar ist und eine Greifeinrichtung, wie die Greifeinrichtung 31, zum Ergreifen einer Werkstückpalette 19 trägt.

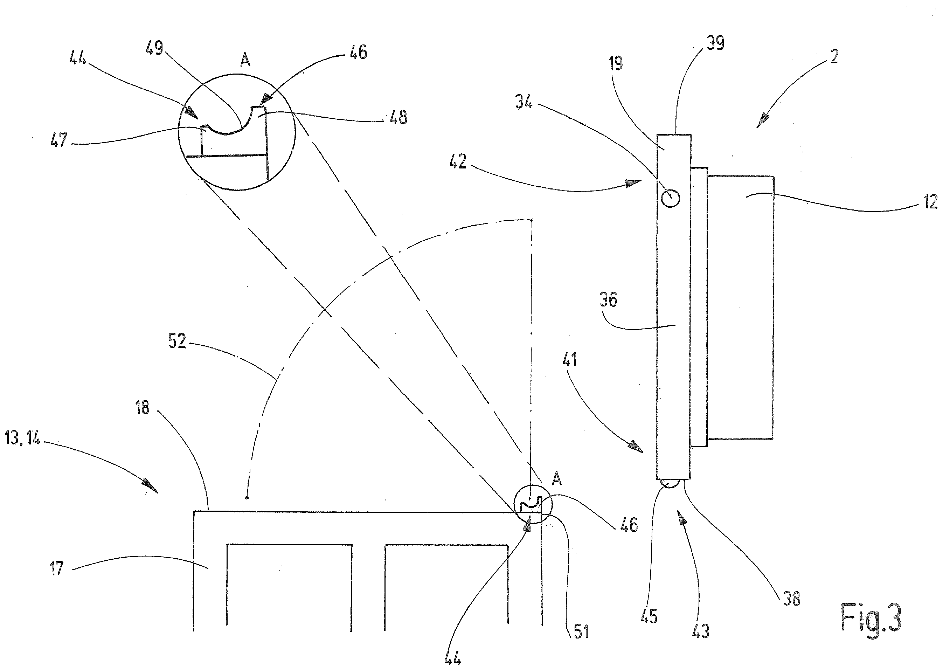

Wie aus Fig. 2 ersichtlich, ist die Greifeinrichtung 31 im Wesentlichen durch einen hakenförmigen Greifarm 32 gebildet, der an dem vertikalen Schlitten 27 vorgesehen, vorzugsweise einstückig daran ausgebildet oder daran befestigt ist. Der Greifarm 32 ragt auf der dem Arbeitsraum 3 zugewandten Seite des Schlittens 27 vor. Auf seiner in Fig. 2 oberen Seite weist der Greifarm eine abschnittsweise gerundete Greiffläche 33 auf, die insbesondere auch aus Fig. 3 hervorgeht und die zur spielarmen drehbaren Aufnahme eines Griffelementes 34 dient, das an der Werkstückpalette 19 vorgesehen ist.

Das Griffelement 34 ist durch einen im Wesentlichen zylindrischen Griffbolzen gebildet, der an der Palette vorgesehen, vorzugsweise einstückig daran angegossen oder in sonstiger Weise ausgebildet oder an dieser befestigt ist. Wie aus Fig. 2 ersichtlich, ist an jeder Schmalseite 36, 37 der Werkstückpalette 19, die im Einsatz der jeweiligen Linearachsenanordnung 21 bzw. 22 zugewandt ist, ein entsprechender Griffbolzen 34 oder ein sonstiges Griffelement 34 auskragend angeordnet. Die zylindrische Außenfläche des Griffbolzens 34 ist passend gestaltet, um in der Greiffläche 33 des Greifarms 32 sicher, aber relativ drehbar aufgenommen zu werden.

Weiterhin Bezug nehmend auf Fig. 2 und 3 weist die Greifeinrichtung 31 ferner einen Anschlagblock 35 auf, der hier integral an dem den Greifarm 32 tragenden vertikalen Schlitten 27 angeformt ist. Der Anschlagblock 35 dient dazu, mit der Werkstückpalette 19 in ihrer Vertikalstellung in Anlage zu kommen und sie abzustützen.

Wie ferner aus Fig. 2 und 3 hervorgeht, weist die Werkstückpalette 19 eine erste und eine zweite Längsseite 38, 39 auf, die weitere Schmalseiten der Werkstückpalette 19 bilden, die zu den Schmalseiten 36, 37 senkrecht verlaufen und diese verbinden. Die erste Längsseite 38 definiert einen ersten Rand 41 der Werkstückpalette 19, während die zweite Längsseite 39 einen zweiten Rand 42 der Werkstückpalette definiert. Unter dem Rand 41 bzw. 42 wird der der Längsseite 38 bzw. 39 benachbarte Bereich der Werkstückpalette 19 verstanden, der auch von der jeweiligen Längsseite 38 bzw. 39 beabstandete Stellen umfasst, die sich auch an den Schmalseiten 36, 37 befinden können. Die Griffbolzen 34 sind bspw. an dem zweiten Rand 42 in der Nähe der zweiten Längsseite 39 der Werkstückpalette 19 angeordnet.

An dem ersten Rand 41, hier insbesondere unmittelbar an der ersten Längsseite 38 der Werkstückpalette 19 sind Lagerelemente 43 der Werkstückpalette 19 vorgesehen, die dazu eingerichtet sind, spielarm in einem zugehörigen Drehlager 44 in der Ablage 17 (vgl. Fig. 3) aufgenommen zu werden. Die Lagerelemente 43 sind hier durch teilzylindrische Bereiche gebildet, die an der ersten Längsseite 38 der Werkzeugpalette 19 hier einstückig angeformt sind. Insbesondere sind hier zwei derartige Lagerelemente 43 im Abstand zueinander, in unmittelbarer Nähe der jeweiligen Schmalseite 36 bzw. 37 angeordnet (vgl. Fig. 2). Dadurch wird die Werkstückpalette 19 im Wesentlichen an den entgegengesetzten Enden bzw. Ecken ihres ersten Randes 41 drehbar gelagert.

Bezugnehmend auf Fig. 3 ist das zu den Lagerelementen 43 passende Drehlager 44 in größeren Einzelheiten veranschaulicht. Das Drehlager 44 ist in der dargestellten Ausführungsform durch eine Klaue 46 gebildet, die hier auf der horizontalen Ablagefläche 18 der Ablage 17 vorgesehen, vorzugsweise einstückig daran angegossen oder daran befestigt ist. Die Klaue 46 weist eine in Seitenansicht im Wesentlichen C-förmige Gestalt auf, die durch einen ersten Klauenfinger 47 und einen zweiten Klauenfinger 48 gebildet ist, die aus der Ablagefläche 18 im Wesentlichen senkrecht nach oben ragen und zwischeneinander eine hier kreisförmige Drehlagerfläche 49 definieren. Die kreisförmige Drehlagerfläche 49 weist einen Innendurchmesser auf, der im Wesentlichen dem Außendurchmesser des teilzylindrischen Bereiches 45 des Lagerelementes 43 entspricht, das spielarm drehbar in das zugehörige Drehlager 44 hineinpasst. Obwohl dies aus den Figuren nicht ersichtlich ist, sind zwei derartige Klauen 46 im Abstand zueinander an einem Längsrand 51 der Ablage 17 in der Nähe der jeweiligen Ecken der Ablage 17 entsprechend der Position der Lagerelemente 43 an der Werkstückpalette 19 angeordnet.

Wie ferner aus Fig. 3 ersichtlich, ist der näher an dem Längsrand 51 der Ablage 17 befindliche zweite Klauenfinger 48 höher ausgebildet, so dass er weiter aus der horizontalen Ablagefläche 18 der Ablage 17 herausragt als der von dem Längsrand 51 weiter entfernte erste Klauenfinger 47. Diese Ausbildung schafft einen Anschlag und eine Führung zur Einführung des Lagerelementes 43 in das Drehlager 44 und ergibt eine vollflächige Drehlagerung und -führung bei der Verschwenkung der Werkstückpalette 19 in dem und um das Drehlager 44. Ferner ermöglicht der kürzer gestaltete erste Klauenfinger 47 eine leichte Verdrehung der Werkstückpalette 19 bis zu ihrer horizontalen Stellung, in der sie flächig auf der Auflagefläche 18 aufliegt, ohne die Verdrehung zu behindern.

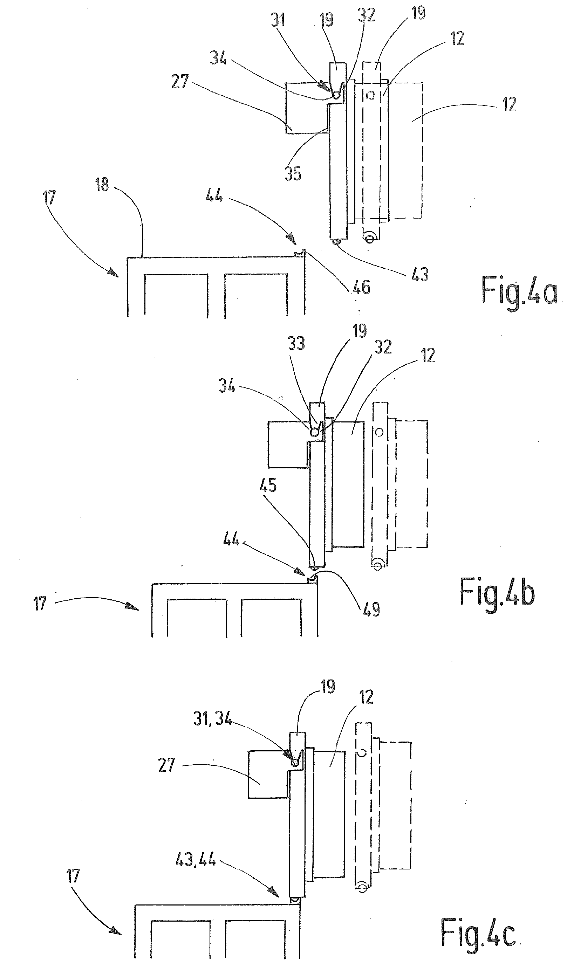

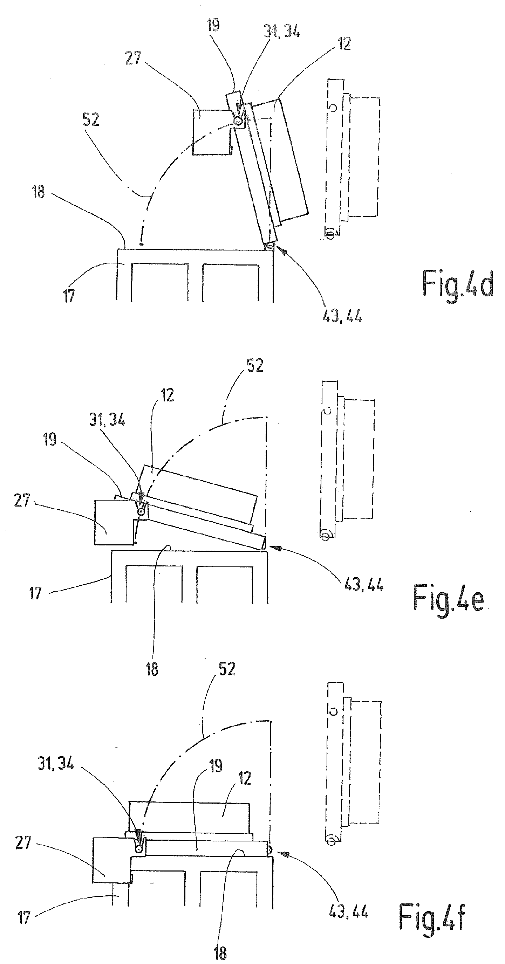

Zur Erläuterung der Funktionsweise der erfindungsgemäßen Werkstückpositioniervorrichtung 28 wird nun auf die Fig. 3 und die Figuren 4a bis 4f Bezug genommen, die den Ablauf der Positionierung einer Werkstückpalette 19 mit darauf aufgespanntem Werkstück 12 in zeitlicher Abfolge zeigen. Ausgegangen wird von der vertikalen Bearbeitungsposition, wie sie in Fig. 3 gezeigt ist. Die Werkstückpalette 19 soll in die in Fig. 4f gezeigte horizontale Stellung überführt werden, in der sie auf der Ablagefläche 18 der Ablage 17 abgelegt ist.

Die Bewegung und Funktion der Werkstückpositioniervorrichtung 28 ist durch eine hier nicht näher dargestellte Steuerlogik gesteuert, die Teil der gesamten Steuerung des Bearbeitungszentrums 1, insbesondere einer CNC-Steuerung des Bearbeitungszentrums 1 sein kann. Fig. 3 zeigt die vertikale Stellung der Werkzeugpalette 19, die diese bei der Bearbeitung in dem Arbeitsraum 3 einnimmt, wie auch aus Fig. 1 ersichtlich. In Fig. 3 sind der Arbeitsraum 3 ebenso wie die Linearachsenanordnungen 21 und 22 der Einfachheit und Übersichtlichkeit wegen weggelassen, um wesentlichen Komponenten der Werkstückpositioniervorrichtung 28 nicht zu verbergen und deren Funktionsweise zu verdeutlichen. Die insoweit beschriebene Werkstückpositioniervorrichtung 28 funktioniert wie folgt:
Zum Entfernen der Werkstückpalette 19 aus dem Arbeitsraum 3 werden die Linearachsen 23, 24 derart verfahren, dass jeder Greifarm 32 mit seiner Greiffläche 33 den zugehörigen Griffbolzen 34 an der Werkstückpalette 19 untergreift. Gegebenenfalls kann die Greifeinrichtung 31 während der Bearbeitung des Werkstücks 12 mit dem Griffbolzen 34 in Eingriff bleiben. Wenn die Greifeinrichtung 31 mit dem Griffbolzen 34 in Eingriff steht, stützt sich die Rückseite der Werkstückpalette 19 gegen den Anschlagblock 35 ab, der die Werkstückpalette 19 in der vertikalen Stellung hält und ein Schwingen derselben verhindert. Bei der Bearbeitung des Werkstücks 12 kann der Anschlag 35 zusätzlich für eine Abstützung und einen ruhigen Halt des Werkstücks 12 sorgen.

Anschließend steuert die Steuerung die Linearachsenanordnungen 21, 22 geeignet an, um die Werkstückpalette 19 mit dem Werkstück 12 von der Bearbeitungseinheit 7 weg zu der Ablage 17 hin zu bewegen. Hierzu kann zunächst allein die horizontale Linearachse 23 bewegt werden, um die Werkstückpalette 19 zunächst in horizontaler Richtung von dem Arbeitsraum 3 weg zu bewegen, wie dies in den Figuren 4a und 4b dargestellt ist. Die vertikale Ausgangsstellung ist in den Fig. 4a-f zu Referenzzwecken mit dargestellt.

Sobald sich die Werkstückpalette 19 mit ihren Lagerelementen 43 über den Drehlagern 44 befindet, kann die Palette mittels der vertikalen Linearachse 24 abgesenkt werden, so dass die Lagerelemente 43 in die Drehlager 44 einfinden und dort drehbar abgelegt und gelagert werden. Der Zustand ist in Fig. 4c veranschaulicht.

Anschließend kann die Werkstückpalette, wie in Fig. 4c angedeutet, um einen Viertelkreis um den Mittelpunkt des Drehlagers 44 herum in den Figuren 4a-f gegen den Uhrzeigersinn verschwenkt werden, um die Werkstückpalette 19 auf die horizontale Ablagefläche 18 abzulegen. Hierzu steuert die Steuerung die horizontale Linearachse 23 und die vertikale Linearachse 24 der ersten und der zweiten Linearachsenanordnung 21, 22 geeignet kombiniert an, damit der in der Greiffläche 33 des Greifarms 32 aufgenommene Griffbolzen 34 auf der in Fig. 4c dargestellten Kreisbahn bzw. dem Kreisbogen 52 verfahren wird. Im Wesentlichen steuert die Steuerung hierzu die horizontale Linearachse 23 derart an, dass diese im Zeitverlauf einer Sinusfunktion folgt, wenn der Ursprung des horizontalen Wegs in dem Mittelpunkt des Drehlagers angenommen wird und der maximale horizontale Bewegungsweg derjenigen Stelle entspricht, an der der Kreisbogen 52 die horizontale Ablagefläche 18 schneidet. Gleichzeitig wird die vertikale Linearachse 24 derart angesteuert, dass diese im Zeitverlauf einer Kosinusfunktion folgt, wobei hier der Ursprung für die vertikale Bewegung wiederum mit dem Mittelpunkt des Drehlagers 44 zusammenfallend angenommen wird, während der maximale vertikale Bewegungsweg der Stelle entspricht, an der der Kreisbogen 52 eine durch den Mittelpunkt des Drehlagers 44 führende, zu der Ablagefläche 18 senkrechte Gerade schneidet.

Die Kombination aus einer derartigen Bewegung der horizontalen und der vertikalen Linearachse 23, 24 hat die zunehmende Verschwenkung der Werkstückpalette 19 von der Vertikalstellung in Fig. 4c in Richtung einer Horizontalstellung zur Folge, wie in den Fig. 4d und 4e veranschaulicht. Das Drehlager 44 sorgt dabei für eine vollflächige satte Drehlagerung und teilweise Abstützung der Werkstückpalette 19 mit dem Werkzeug 12, wodurch die Linearachsen 23, 24 entlastet werden. Der erste Finger 47 der Klaue 46 ist passend gestaltet, damit die Werkstückpalette 19 bis in die in Fig. 4f gezeigte horizontale Endlage überführt werden kann, in der sie auf der horizontalen Ablagefläche 18 der Ablage 17 aufliegt. Die drehbare Aufnahme der Griffbolzen 34 in den Greifarmen 32 unterstützt die Verschwenkung der Werkstückpalette 19.

Vorteilhafterweise werden hier lediglich die horizontale Linearachse 23 und die vertikale Linearachse 24 der ersten und der zweiten Linearachsenanordnung 21, 22 als eine Schwenkeinrichtung 53 zur Verschwenkung der Werkstückpalette 19 verwendet. Komplizierte und groß bauende Drehvorrichtungen oder teure pneumatische oder hydraulische Kolben-Zylinder-Einheiten, die herkömmlich zur Verschwenkung der Werkstückpalette 19 eingesetzt werden, werden hier nicht benötigt. Vielmehr reichen lediglich die auch sonst zum Transport der Werkstückpalette 19 benötigten Linearachsen 23, 24 aus. Die Linearachsen 23, 24 sind auch hinreichend robust und kraftvoll gestaltet, um die durch die Werkstückpalette 19 und das Werkzeug 12 verursachten Lasten mühelos tragen zu können. Die Linearachsen 23, 24 können auch mit äußerst hoher Präzision verfahren werden, um eine präzise Schwenkbewegung der Werkstückpalette 19 zu bewirken.

Sofern gewünscht, können die Linearachsen 23, 24 ausgehend von dem Zustand in Fig. 4f passend verfahren werden, um die Greifeinrichtung 31 mit den Griffbolzen 34 der Werkstückpalette 19 außer Eingriff zu bringen und diese freizugeben.

Soll eine Werkstückpalette 19 umgekehrt ausgehend von der Ablage 17 und dem in Fig. 4f dargestellten Zustand in die in Fig. 3 dargestellte Bearbeitungsposition überführt werden, werden die horizontale und die vertikale Linearachse 23, 24 der ersten und zweiten Linearachsenanordnung 21, 22 im umgekehrten Sinne angesteuert, um den Griffbolzen 34 der Werkstückpalette 19 zu ergreifen, anschließend durch ein kombiniertes Verfahren der beiden Linearachsen 23, 24 die Werkstückpalette auf einem Viertelkreis im Uhrzeigersinn in den Fig. 4a-f von der Horizontalstellung in die Vertikalstellung umzusetzen, danach die Werkstückpalette 19 in der in Fig. 4c dargestellten Vertikalstellung anzuheben, um die Lagerelemente 43 mit den Drehlagern 44 außer Eingriff zu bringen, und schließlich die passend angehobene Werkstückpalette 19 durch Verfahren der horizontalen Linearachse 23 in die endgültige vertikale Bearbeitungsposition gemäß Fig. 3 zu überführen.

Vorteilhafterweise können die hierzu benötigten Linearbewegungen der Linearachsen 23, 24 mit einer CNC-Steuerung des Bearbeitungszentrums 1 aufwandsarm und schnell realisiert werden. Die von der Schwenkeinrichtung 53 mit den Linearachsen 23, 24 bewirkte Verschwenkung auf der Kreisbahn 52 kann von einer in der CNC-Steuerung bereits vorhandenen Funktionalität abgeleitet werden, die dazu dient, ein Werkzeug bei der Bearbeitung auf einem Kreisbogen zu führen. Diese Funktionalität kann vorteilhafterweise von der Schwenkeinrichtung 53 genutzt werden.

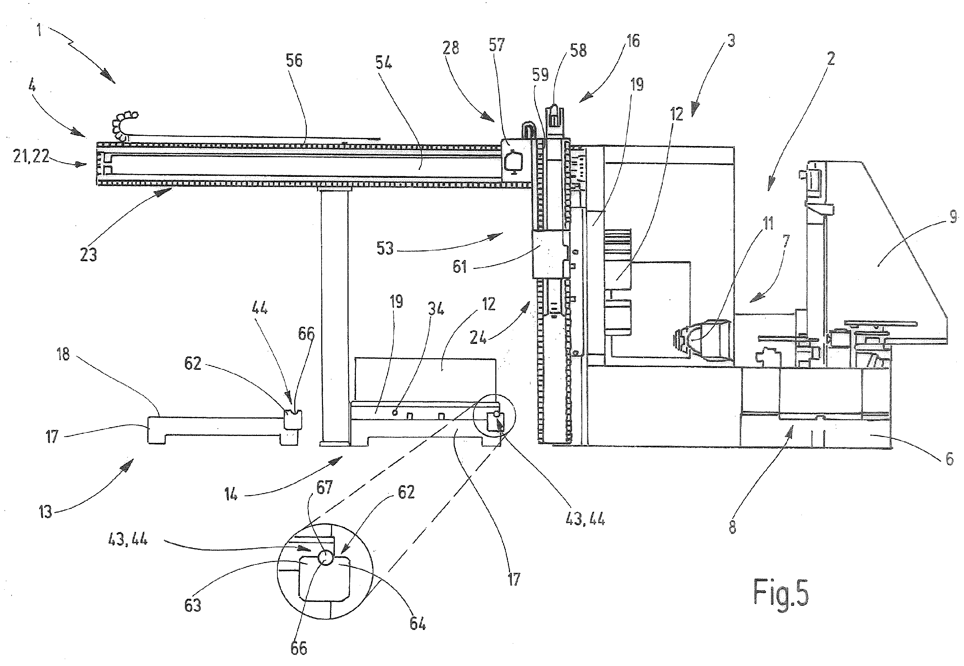

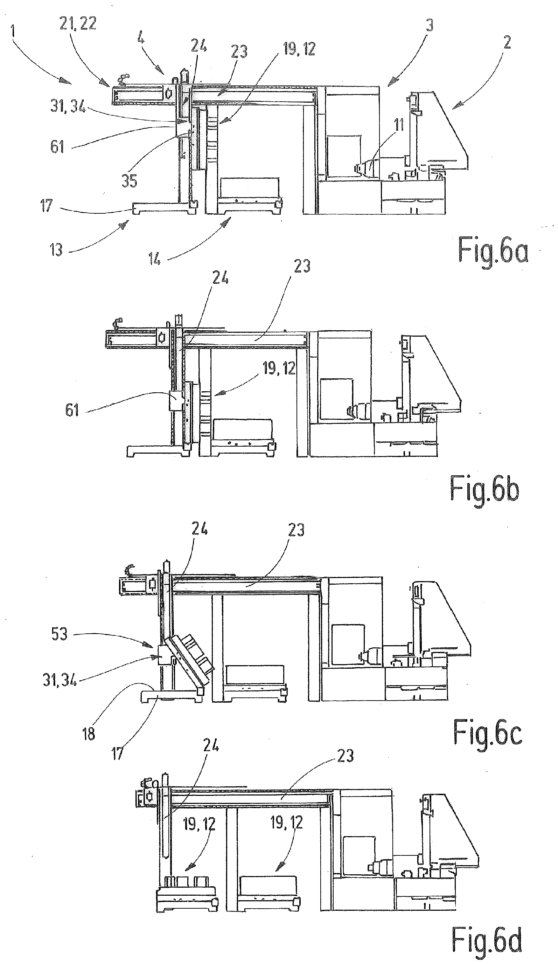

Fig. 5 und 6a-g zeigen detailliertere Seitenansichten des in Fig. 1 dargestellten Bearbeitungszentrums 1 mit einer modifizierten Ausführungsform der Werkstückpositioniervorrichtung 28. Soweit Teile hinsichtlich der Struktur und der Funktion denjenigen der Ausführungsform gemäß den Fig. 1 bis 4 entsprechen, wird unter Zugrundelegung gleicher Bezugszeichen auf die vorstehende Beschreibung verwiesen.

Fig. 5 veranschaulicht eine mögliche Ausführungsform der horizontalen Linearachse 23 und der vertikalen Linearachse 24 in größeren Einzelheiten. Hier weist die horizontale Linearachse 23 einen horizontalen Ausleger 54 auf, an dem ein hier nicht näher dargestellter Motor angeordnet ist, der über eine Kette 56 einen Horizontalschlitten 57 in horizontaler Richtung antreibt. An dem Horizontalschlitten 57 ist ein Vertikalausleger 58 befestigt, der einen Motor 59 trägt, der über ein Kettengetriebe 61 einen Vertikalschlitten 62 in vertikaler Richtung antreibt. Im Übrigen erfolgt die Steuerung und Bewegung der Linearachsen 23, 24 in der oben geschilderten Weise.

Wie ferner aus Fig. 5 ersichtlich, weist das Bearbeitungszentrum 1 hier sowohl die Rüststation 13 als auch die Pufferstation 14 auf. Jede Station 13, 14 weist eine Ablage 17 auf, die im Wesentlichen gleich, in Form eines Ablagetisches ausgebildet ist. Die Ablage 17 ist Teil der Werkstückpositioniervorrichtung 28 für die Werkstückpalette 19.

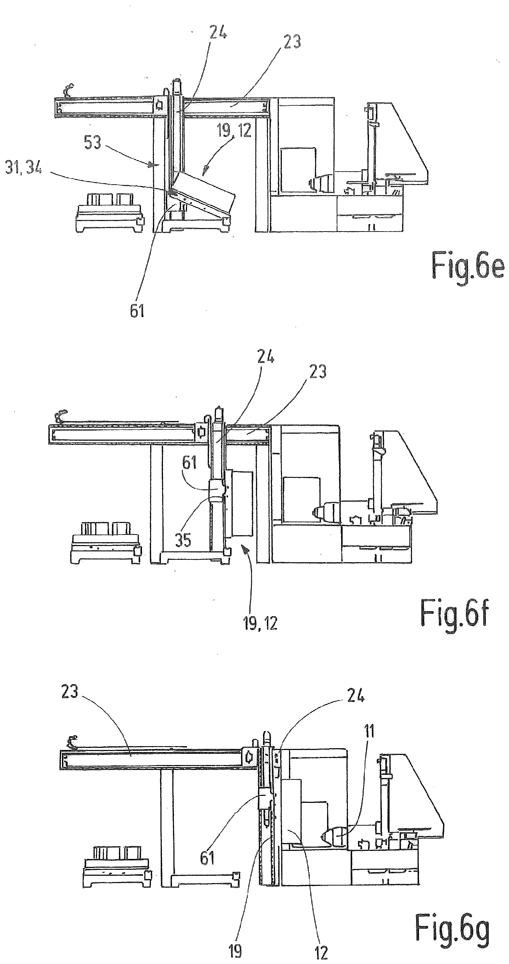

Die Ausführungsform gemäß den Fig. 5 und 6 unterscheidet sich von derjenigen gemäß den Fig. 1-4 insbesondere in der Drehlagerung der Werkstückpalette 19 an der Ablage 17. Hier sind anstelle der an der horizontalen Ablagefläche 18 vorgesehenen Klauen 46 Klauen 62 vorgesehen, die jeweils auf einer der Schmalseite 36 bzw. 37 der Werkstückpalette 19 zugeordneten Schmalseite 63 der Ablage 17 angeordnet sind. Die Klauen 62 können vorzugsweise einstückig an den Schmalseiten 36 bzw. 37 angegossen oder in sonstiger Weise an diesen befestigt sein. Die Klaue 62 weist wiederum zwei Klauenfinger 63, 64 auf, die zwischeneinander eine hier im Wesentlichen V-förmige, leicht gerundete Drehlagerfläche 66 definieren.

Die Drehlagerflächen 66 nehmen Lagerelemente 43 auf, die hier als im Wesentlichen zylindrische Lagerzapfen 67 ausgebildet sind, die an den Schmalseiten 36, 37 auskragend angeordnet sind. Die Lagerzapfen 67 sind in der Nähe der die Schmalseiten 36 und 37 mit der ersten Längsseite 38 verbindenden Ecken positioniert.

Vorteilhafterweise kann bei dieser Ausführungsform der Drehlagerung die horizontale Ablagefläche 18 der Ablage 17 völlig plan, ohne Hindernisse ausgebildet sein, und sie lässt sich verhältnismäßig einfach realisieren. Es ist verständlich, dass hier auch die Drehlagerung gemäß den Fig. 2-4 anstelle der in Fig. 5 gezeigten verwendet werden könnte. Ferner ist verständlich, dass die Drehlagerflächen 49, 66 wahlweise gerundet, V-förmig oder in beliebiger sonstiger Weise geeignet gestaltet sein können, um die gewünschte Funktion der Drehlagerung zu erfüllen.

In Fig. 5 ist die Vertikalstellung veranschaulicht, in der eine Werkstückpalette 19 mit darauf aufgespanntem Werkzeug 12 in dem Arbeitsraum 3 gehalten wird, um durch die Bearbeitungsspindel 11 der Bearbeitungseinheit 7 bearbeitet zu werden. Fig. 6a bis 6g zeigen in vereinfachten Darstellungen die zeitliche Abfolge der Positionierung von Werkstückpaletten 19 in einem Bearbeitungszentrum 1, das sowohl eine Rüststation 13 als auch eine Pufferstation 14 aufweist, um die Bearbeitungszeiten gering zu halten. Nach der Bearbeitung wird die Werkstückpalette 19 durch Verfahren der horizontalen Linearachse 23 zu der Rüststation 13 zurück verfahren, um auf deren Ablage 17 abgelegt zu werden. Hierzu wird die Werkstückpalette 19 aus der in Fig. 6a angehobenen Stellung abgesenkt, bis die Lagerelemente 43, hier insbesondere die Lagerzapfen 67, in die zugehörigen Drehlager 44, hier insbesondere die Klauen 62, einfinden. Dieser Zustand ist in Fig. 6b veranschaulicht.

Danach wird durch gleichzeitiges Verfahren der horizontalen Linearachse 23 und der vertikalen Linearachse 24 beider Linearachsenanordnungen 21 und 22 die Werkstückpalette 19 mit dem Werkstück 12 in Fig. 6c gegen den Uhrzeigersinn verschwenkt, um auf der horizontalen Ablagefläche 18 der Ablage 17 abgelegt zu werden, wie in Fig. 6d dargestellt.

Danach wird das Linearachsensystem 16 zu der Pufferstation 14 verfahren, um die dort befindliche weitere Werkstückpalette 19 mit der Greifeinrichtung 31 zu ergreifen und aus der in Fig. 6d dargestellten Horizontalstellung im Uhrzeigersinn zu verschwenken (vgl. Fig. 6e), um sie in eine Vertikalstellung zu versetzen. Dies erfolgt durch eine kombinierte Bewegung der horizontalen und der vertikalen Linearachse 23, 24.

Anschließend kann die weitere Werkstückpalette 19 mit dem Werkzeug 12 angehoben werden, um die Lagerzapfen 67 mit den Klauen 62 außer Eingriff zu bringen und die weitere Werkstückpalette 19 in die gewünschte Höhenlage zu überführen, wie in Fig. 6f gezeigt. Schließlich wird die weitere Werkstückpalette 19 in horizontaler Richtung zugestellt und in die in Fig. 6g gezeigte Bearbeitungsposition gebracht.

Vorteilhafterweise kann bei der Bearbeitung einer Werkstückpalette 19 gleichzeitig eine andere Werkstückpalette 19 an der Rüststation 13 gerüstet und auf der Pufferstation zwischengelagert werden, um für den nächsten Bearbeitungsvorgang bereit zu sein. Die Bearbeitungszeiten können dadurch deutlich verkürzt werden.

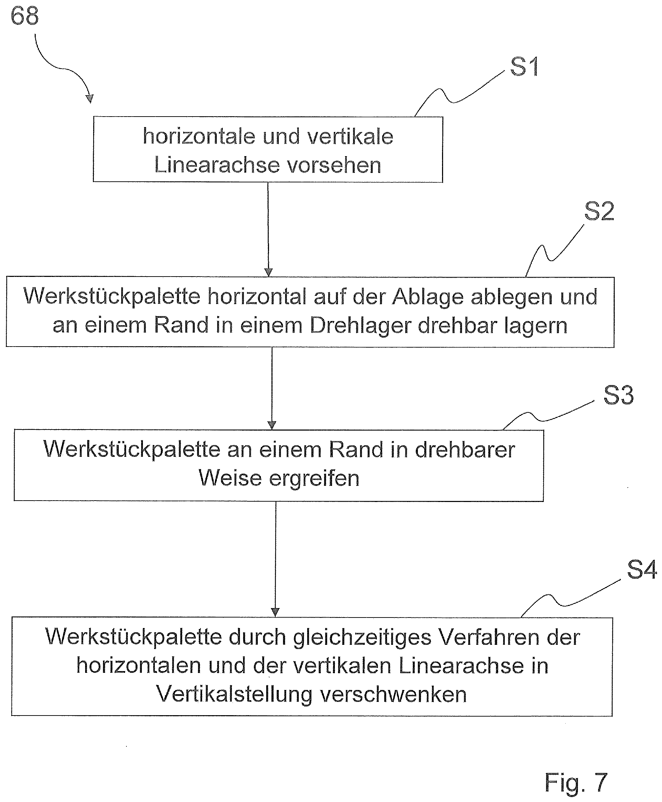

Fig. 7 zeigt ein vereinfachtes Flussdiagramm eines Verfahrens zur Positionierung eines auf einer Werkstückpalette aufgespannten Werkstücks in einem Bearbeitungszentrum, bspw. eines Werkstücks 12 auf einer Werkstückpalette 19 in dem Bearbeitungszentrum 1, wie in den Fig. 1-4 bzw. 5-6 veranschaulicht. Das Verfahren 68 läuft wie folgt ab:
Im Schritt S1 werden eine horizontale und eine vertikale Linearachse, wie bspw. die Linearachsen 23 und 24 gemäß den Fig. 1-6, zum Transport einer Werkstückpalette 19 in vertikaler und horizontaler Richtung vorgesehen. Die Linearachsen können Teil einer allgemeinen Transporteinrichtung sein, die Werkstückpaletten 19 in das Bearbeitungszentrum 1 hinein, innerhalb dessen und aus diesem heraus befördert.

Im Schritt S2 wird eine Werkstückpalette 19 in horizontaler Stellung auf einer Ablage, wie bspw. der Ablage 17 einer Rüststation 13 oder einer Pufferstation 14, wie in den Fig. 1 und 5 veranschaulicht, abgelegt, wobei ein erster Rand der Werkstückpalette in einem Drehlager, wie bspw. dem Drehlager 44 in den Fig. 1 und 5, derart drehbar aufgenommen wird, dass die Werkstückpalette 19 um dieses Drehlager 44 herum geschwenkt bzw. verdreht werden kann.

Im Schritt S3 wird die in horizontaler Stellung auf der Ablage 17 liegende Werkstückpalette mit einer Greifeinrichtung, bspw. der Greifeinrichtung 31 der Fig. 1-6, an einem anderen zweiten Rand der Werkstückpalette 19 in einer relativ drehbaren Weise ergriffen, so dass ein Griffelement, bspw. der Griffbolzen 34, der Werkstückpalette 19 bspw. in einem Greifarm 32 sicher aufgenommen wird, eine relative Verdrehung zwischen diesen aber zugelassen ist.

Im Schritt S4 werden die horizontale und die vertikale Linearachse, z.B. 23, 24, gleichzeitig, in kombinierter, aufeinander abgestimmter Weise derart verfahren, dass der zweite Rand der Werkstückpalette 19 auf einer Kreisbahn 52 um das Drehlager 44 herum verschwenkt wird, um die Werkstückpalette 19 von einer Horizontalstellung in eine Vertikalstellung, wie bspw. in den Fig. 2, 4c und 6b ersichtlich, umzusetzen.

Mit dem erfindungsgemäßen Verfahren können auf eine Werkstückpalette 19 aufgespannte Werkstücke 12 auf einfache Weise, mit einfachen, bereits vorhandenen Mitteln zwischen einer Horizontalstellung und einer Vertikalstellung hin und her verschwenkt werden, ohne dass hierzu eine spezielle Werkstückdreh- bzw. -schwenkvorrichtung erforderlich ist.

Das Verfahren kann die weiteren Schritte des Verfahrens der vertikalen und/oder horizontalen Linearachse 23, 24 in einer sequentiellen oder kombinierten Weise aufweisen, um die Werkstückpalette 19 mit dem Werkstück weiter anzuheben und in horizontaler Richtung zu einer Bearbeitungsstation 2 hin zu befördern, um sie in einer vertikalen Bearbeitungsposition zu positionieren.

Das Verfahren kann ferner die umgekehrten Schritte des Entfernens der Werkstückpalette 19 mit dem Werkstück 12 aus der Bearbeitungsstation 2 durch Verfahren der horizontalen und der vertikalen Linearachse 23, 24, des Absenkens der Werkstückpalette 19, um ein an ihrem ersten Rand vorgesehenes Lagerelement 43 in ein Drehlager 44 an einer Ablage 17 bspw. der Rüststation 13 oder der Pufferstation 14 drehbar abzulegen, und ein Verschwenken der Werkstückpalette 19 um das Drehlager 44 herum durch kombiniertes Verfahren der horizontalen und der vertikalen Linearachse 23, 24 in einer derartigen Weise aufweisen, dass der zweite Rand der Werkstückpalette 19 einem Kreisbogen 52 folgend abgesenkt wird, bis die Werkstückpalette 19 in horizontaler Stellung flächig auf der Ablage 17 aufliegt.

Im Rahmen der Erfindung sind zahlreiche Modifikationen möglich. Wie bereits erwähnt, sind bspw. unterschiedliche Formen für die Greifeinrichtung 31 und das Griffelement 34 möglich, um eine Werkstückpalette 19 in relativ drehbarer Weise zu ergreifen. Ebenso können die Lagerelemente 43 und das Drehlager 44 unterschiedliche Formen einnehmen, soweit sie eine Drehlagerung einer Werkstückpalette 19 an einem ihrer Ränder ermöglichen. Die Linearachsen 23, 24 können, wie in den Figuren veranschaulicht, mit einem Getriebe, wie bspw. dem Kettengetriebe 59, oder getriebelos arbeiten und bspw. durch Elektroantriebe angetrieben werden. Die erfindungsgemäße Werkstückpositioniervorrichtung 28 eignet sich für unterschiedliche Bearbeitungsmaschinen unterschiedlicher Dimensionen und für unterschiedliche Anwendungen sowie für Bearbeitungszentren, die eine oder mehrere Bearbeitungsstationen aufweisen können, denen ein Werkstück 12 nacheinander zugeführt wird. Insofern kann die Werkstückpositioniervorrichtung 28 auch Teil einer allgemeinen Transporteinrichtung sein, die Werkstückpaletten 19 in das Bearbeitungszentrum 1 hinein, innerhalb des Bearbeitungszentrums 1 und aus dem Bearbeitungszentrum 1 heraus befördert. Vorteilhafterweise können Werkstückpaletten 19 mit oder ohne Werkstücke 12 auch an entsprechenden Lagerplätzen in vertikaler Lage zwischengelagert und von dort aus in vertikaler Lage befördert werden, wobei die Schwenkeinrichtung 53 der Werkstückpositioniervorrichtung 28 es auf einfache Weise ermöglicht, die Werkstückpaletten 19 von einer Vertikalstellung in eine Horizontalstellung und umgekehrt umzusetzen.

Es sind eine Werkstückpositioniervorrichtung 28 für ein Bearbeitungszentrum 1, ein Bearbeitungszentrum 1 und ein Verfahren zur Positionierung eines auf einer Werkstückpalette 19 aufgespannten Werkstücks 12 in einem Bearbeitungszentrum 1 offenbart. Die Werkstückpositioniervorrichtung 28 weist eine Ablage 17 auf, die eine horizontale Ablagefläche 18 für eine Werkstückpalette 19 mit einem darauf aufgespannten Werkstück 12 und ein Drehlager 44 enthält, das die Werkstückpalette 19 an einem ersten Rand 41 derselben drehbar aufnimmt. Die Werkstückpositioniervorrichtung 28 weist ferner eine Schwenkeinrichtung 53 zur Umsetzung der Werkstückpalette 19 von einer Horizontalstellung in eine Vertikalstellung und umgekehrt auf. Die Schwenkeinrichtung 53 weist eine horizontale und eine vertikale Linearachse 23, 24 und eine Greifeinrichtung 31 auf und ist dazu eingerichtet, eine Werkstückpalette 19 an einem anderen, zweiten Rand 42 zu ergreifen und durch gleichzeitiges Verfahren der horizontalen und der vertikalen Linearachse 23, 24 die Werkstückpalette 19 um das Drehlager 44 herum auf einer Kreisbahn 52 zu verschwenken. Die Verschwenkung wird allein durch motorangetriebene Linearachsen 23, 24 bewirkt, die auch für den Transport der Werkstückpaletten 19 vorgesehen sind.

## Patentansprüche

1. Werkstückpositioniervorrichtung für ein Bearbeitungszentrum (1), insbesondere ein Horizontalbearbeitungszentrum, bei dem Werkstücke (12) in einem auf einer Werkstückpalette (19) aufgespannten Zustand in dem Bearbeitungszentrum (1) bearbeitet werden,
mit einer Ablage (17), die eine horizontale Ablagefläche (18) für eine Werkstückpalette (19) und ein Drehlager (44) aufweist, das eingerichtet ist, um die Werkstückpalette (19) an einem ersten Rand (41) derselben drehbar aufzunehmen, und
mit einer Schwenkeinrichtung (53) zur Umsetzung einer Werkstückpalette (19) von einer Horizontalstellung in eine Vertikalstellung und umgekehrt, wobei die Schwenkeinrichtung (53) eingerichtet ist, um eine Werkstückpalette (19) an einem anderen, zweiten Rand (42) zu ergreifen und durch gleichzeitiges Verfahren einer horizontalen und einer vertikalen Linearachse (23, 24) den zweiten Rand (42) der Werkstückpalette (19) auf einer Kreisbahn (52) um das Drehlager (44) herum zu verschwenken, um die Werkstückpalette (19) in horizontaler Stellung auf der Ablage (17) abzulegen bzw. sie in eine Vertikalstellung zu überführen, und
wobei die Werkstückpositioniervorrichtung (28) eingerichtet ist, um die Werkstückpalette (19) in deren Vertikalstellung mittels der vertikalen Linearachse (24) in vertikaler Richtung von dem Drehlager (44) der Ablage (17) abzuheben und auf dieses abzusenken sowie mittels der horizontalen Linearachse (23) in horizontaler Richtung zu transportieren.

2. Werkstückpositioniervorrichtung nach Anspruch 1, wobei die Schwenkeinrichtung (53) dazu eingerichtet ist, die Werkstückpalette (19) auf einem Viertelkreis um 90° um das Drehlager (44) herum in jedem Drehsinn zu verschwenken.

3. Werkstückpositioniervorrichtung nach Anspruch 1 oder 2, wobei die horizontale Linearachse (23) einen durch einen Motor angetriebenen horizontalen Schlitten (26; 57) aufweist, der für eine Beschickung und Entnahme der Werkstückpalette (19) zu einer Bearbeitungsstation (2) des Bearbeitungszentrums (1) hin bzw. von dieser weg eingerichtet ist, und die vertikale Linearachse (24) einen durch einen Motor angetriebenen vertikalen Schlitten (27; 61) aufweist, der dazu eingerichtet ist, eine Werkstückpalette (19) in vertikaler Richtung anzuheben oder abzusenken.

4. Werkstückpositioniervorrichtung nach einem beliebigen der vorstehenden Ansprüche, wobei die Bewegung der Linearachsen (23, 24) durch eine Steuerung, insbesondere CNC-Steuerung, des Bearbeitungszentrums (1) gesteuert ist.

5. Werkstückpositioniervorrichtung nach einem beliebigen der vorstehenden Ansprüche, wobei die horizontale und die vertikale Linearachse (23, 24) derart angesteuert werden, dass der Bewegungsweg einer der Linearachsen (23, 24) im Zeitverlauf einer Kosinusfunktion folgt, während der Bewegungsweg der anderen Linearachse (23, 24) im Zeitverlauf einer Sinusfunktion folgt.

6. Werkstückpositioniervorrichtung nach einem beliebigen der vorstehenden Ansprüche, wobei das Drehlager (44) eine Klaue (46; 62) aufweist, die auf der horizontalen Ablagefläche (18) oder an einer Seite der Ablage (17) angeordnet ist und eine kreisförmige oder V-förmige Drehlagerfläche (49; 66) definiert.

7. Werkstückpositioniervorrichtung nach Anspruch 6, wobei die Klaue (46) einen ersten und einen zweiten Klauenfinger (47, 48) aufweist, die aus der horizontalen Ablagefläche (18) vorragen und zwischeneinander die Drehlagerfläche (49) definieren, wobei der an einem Rand (51) der Ablage (17) näher gelegene zweite Klauenfinger (48) weiter aus der horizontalen Ablagefläche (18) herausragt als der von dem Rand (51) der Ablage (17) weiter entfernte erste Klauenfinger (47).

8. Werkstückpositioniervorrichtung nach einem beliebigen der vorstehenden Ansprüche, die ferner wenigstens ein an einer Werkstückpalette (19) vorgesehenes Lagerelement (43) aufweist, das jeweils dazu eingerichtet ist, spielarm in einem der Drehlager (44) drehbar aufgenommen zu werden.

9. Werkstückpositioniervorrichtung nach Anspruch 8, wobei das wenigstens eine Lagerelement (43) durch einen teilzylindrischen Bereich (45), der an einer sich an den ersten Rand (41) anschließenden Seite (38) einer Werkstückpalette (19) ausgebildet ist, oder durch einen aus einer Seitenfläche (36, 37) einer Werkstückpalette (19) auskragenden zylindrischen Lagerzapfen (67) gebildet ist, wobei der Außendurchmesser des teilzylindrischen Bereichs (45) oder des Lagerzapfens (67) zu Innenmaßen einer Drehlagerfläche (49, 66) des Drehlagers (44) passt.

10. Werkstückpositioniervorrichtung nach Anspruch 8 oder 9, wobei zwei oder mehrere Lagerelemente (43) im Abstand zueinander an dem ersten Rand (41) der Werkstückpalette (19) und eine entsprechende Anzahl der Drehlager (44) im Abstand zueinander an einem dem ersten Rand (41) der Werkstückpalette (19) zugeordneten Rand (51) der Ablage (17) vorgesehen sind.

11. Werkstückpositioniervorrichtung nach einem beliebigen der vorstehenden Ansprüche, wobei die Werkstückpalette (19) wenigstens ein Griffelement (34) trägt und die Schwenkeinrichtung (53) eine Greifeinrichtung (31) aufweist, die dazu eingerichtet ist, das Griffelement (34) in einer eine relative Verdrehung zulassenden Weise zu ergreifen.

12. Werkstückpositioniervorrichtung nach Anspruch 11, wobei das wenigstens eine Griffelement (34) ein an der Werkstückpalette (19) vorgesehener Griffbolzen ist, der in der Nähe des zweiten Randes (42) der Werkstückpalette (19) an einer Seitenfläche (36, 37) der Werkstückpalette (19) auskragt und eine im Wesentlichen zylindrische Außenfläche zum Ergreifen durch die Greifeinrichtung (31) aufweist.

13. Werkstückpositioniervorrichtung nach Anspruch 11 oder 12, wobei die Greifeinrichtung (31) einen Greifarm (32) aufweist, der an einem Schlitten (26, 27; 57, 61) einer von der horizontalen und der vertikalen Linearachse (23, 24) angeordnet ist und eine wenigstens abschnittsweise gerundete Greiffläche (33) zur spielarmen drehbaren Aufnahme des Griffelementes (34) der Werkstückpalette (19) aufweist.

14. Werkstückpositioniervorrichtung nach Anspruch 13, wobei die Greifeinrichtung (31) ferner einen Anschlagblock (35) aufweist, der an dem Schlitten (26, 27; 57, 61) ausgebildet und angeordnet ist, um bei einer Verschwenkung der Werkstückpalette (13) in eine Vertikalstellung mit dieser in Anlage zu kommen.

15. Bearbeitungszentrum zur Bearbeitung von Werkstücken, die auf einer Werkstückpalette (19) aufgespannt sind,
mit einer Bearbeitungsstation (2), die eine an einem Maschinenbett (6) bewegbar gelagerte und geführte Bearbeitungsspindel (11) aufweist;
mit einer Rüststation (13) zum Aufspannen von Werkstücken (12) auf eine Werkstückpalette (19) und/oder mit einer Pufferstation (14) zur vorübergehenden Zwischenlagerung einer Werkstückpalette (19) mit darauf aufgespanntem Werkstück (12), und
mit einer Werkstückpositioniervorrichtung (28) nach einem beliebigen der vorstehenden Ansprüche, die dazu eingerichtet ist, eine Werkstückpalette (19) mit dem Werkstück (12) während eines Transports zwischen einer von der Rüststation (13), der Pufferstation (14) und der Bearbeitungsstation (2) und einer anderen der Stationen (13, 14, 2) von einer Horizontalstellung in eine Vertikalstellung oder umgekehrt umzusetzen.

16. Bearbeitungszentrum nach Anspruch 15, das ein Horizontalbearbeitungszentrum ist, bei dem die Bearbeitungsspindel (11) in einer im Wesentlichen horizontalen Stellung an einem Maschinengestell (9) gehaltert ist und Werkstücke (12) auf der Werkstückpalette (19) in horizontaler Stellung beladen und in vertikaler Stellung bearbeitet werden.

17. Bearbeitungszentrum nach Anspruch 15 oder 16, das sowohl eine Rüststation (13) mit einer Ablage (17) als auch eine Pufferstation (14) mit einer Ablage (17) aufweist, wobei die Werkstückpositioniervorrichtung (28) dazu eingerichtet ist, Werkstückpaletten (19) in horizontaler Stellung auf den Ablagen (17) der Rüststation (13) und der Pufferstation (14) abzulegen und in vertikaler Stellung zwischen der Rüststation (13), der Pufferstation (14) und der Bearbeitungsstation (2) zu transportieren.

18. Verfahren zur Positionierung eines auf einer Werkstückpalette (19) aufgespannten Werkstücks (12) in einem Bearbeitungszentrum (1), das die Schritte aufweist:
Vorsehen einer horizontalen und einer vertikalen Linearachse (23, 24) zum Transport einer Werkstückpalette (19) in vertikaler und horizontaler Richtung (S1);
Ablegen der Werkstückpalette (19) in horizontaler Stellung auf einer Ablage (17), so dass ein erster Rand (41) der Werkstückpalette (19) in einem Drehlager (44) drehbar aufgenommen wird (S2),
Ergreifen der Werkstückpalette (19) an einem anderen, zweiten Rand (42) in einer relativ drehbaren Weise (S3),
gleichzeitiges Verfahren der horizontalen und der vertikalen Linearachse (23, 24), um die Werkstückpalette (19) auf einer Kreisbahn (52) um das Drehlager (44) herum zu verschwenken (S4), um sie von einer Horizontalstellung in eine Vertikalstellung umzusetzen oder umgekehrt,
Abheben der Werkstückpalette (19) von dem Drehlager (44) der Ablage (17) oder Absenken der Werkstückpalette (19) auf das Drehlager (44), während sich die Werkstückpalette (19) in der Vertikalstellung befindet, und
Transport der Werkstückpalette (19) in horizontaler Richtung, während sich die Werkstückpalette (19) in der Vertikalstellung befindet.

## Claims

1. Workpiece positioning device for a machining centre (1), in particular a horizontal machining centre, in which workpieces (12) clamped onto a workpiece palette (19) are machined in the machining centre (1),
with a repository (17) which has a horizontal repository surface (18) for a workpiece palette (19), and a rotary bearing (44) which is configured to receive the workpiece palette (19) in rotatable fashion at a first edge (41) thereof, and
with a pivot device (53) for converting a workpiece palette (19) from a horizontal position to a vertical position and vice versa, wherein the pivot device (53) is configured to grip a workpiece palette (19) at another second edge (42) and by simultaneous movement of a horizontal and a vertical linear axis (23, 24), pivot the second edge (42) of the workpiece palette (19) on an orbit (52) about the rotary bearing (44) in order to deposit the workpiece palette (19) in a horizontal position on the repository (17) or transfer it into a vertical position, and
wherein the workpiece positioning device (28) is configured to lift the workpiece palette (19) in its vertical position from the rotary bearing (44) of the repository (17) and lower it thereon in the vertical direction by means of the vertical linear axis (24) and transport it in the horizontal direction by means of the horizontal linear axis (23).

2. Workpiece positioning device according to claim 1, wherein the pivot device (53) is configured to pivot the workpiece palette (19) through 90° about the rotary bearing (44) in a quarter circle in each rotation direction.

3. Workpiece positioning device according to claim 1 or 2, wherein the horizontal linear axis (23) has a horizontal carriage (26; 57) which is driven by a motor and configured to deliver the workpiece palette (19) to or remove it from a machining station (2) of the machining centre (1), and the vertical linear axis (24) has a vertical carriage (27; 61) which is driven by a motor and configured to raise or lower a workpiece palette (19) in the vertical direction.

4. Workpiece positioning device according to any of the preceding claims, wherein the movement of the linear axes (23, 24) is controlled by a controller, in particular a CNC controller of the machining centre (1).

5. Workpiece positioning device according to any of the preceding claims, wherein the horizontal and the vertical linear axes (23, 24) are actuated such that the movement path of one of the linear axes (23, 24) in a time curve follows a cosine function, while the movement path of the other linear axis (23, 24) in a time curve follows a sine function.

6. Workpiece positioning device according to any of the preceding claims, wherein the rotary bearing (44) has a claw (46; 62) which is arranged on the horizontal repository surface (18) or on one side of the repository (17) and defines a circular or V-shaped rotary bearing face (49; 66).

7. Workpiece positioning device according to claim 6, wherein the claw (46) has a first and a second claw finger (47, 48) which protrude from the horizontal repository surface (18) and between them define the rotary bearing face (49), wherein the second claw finger (48) situated closer to the one edge (51) of the repository (17) protrudes further from the horizontal repository surface (18) than the first claw finger (47) arranged further away from the edge (51) of the repository (17).

8. Workpiece positioning device according to any of the preceding claims, which furthermore comprises at least one bearing element (43) provided on a workpiece palette (19) and configured to be received so as to be rotatable with little play in one of the rotary bearings (44).

9. Workpiece positioning device according to claim 8, wherein the at least one bearing element (43) is formed by a partially cylindrical region (45) which is formed on a side (38) of a workpiece palette (19) adjoining the first edge (41), or by a cylindrical bearing journal (67) protruding from a side face (36, 37) of a workpiece palette (19), wherein the outer diameter of the partially cylindrical region (45) or the bearing journal (67) is adapted to the inner dimensions of a rotary bearing face (49, 66) of the rotary bearing (44).

10. Workpiece positioning device according to claim 8 or 9, wherein two or more bearing elements (43) are arranged spaced apart from each other on the first edge (41) of the workpiece palette (19), and a corresponding number of rotary bearings (44) are arranged spaced apart from each other on an edge (51) of the repository (17) assigned to the first edge (41) of the workpiece palette (19).

11. Workpiece positioning device according to any of the preceding claims, wherein the workpiece palette (19) carries at least one grip element (34), and the pivot device (53) has a gripper device (31) which is configured to grip the grip element (34) in a manner which allows a relative twist.

12. Workpiece positioning device according to claim 11, wherein the at least one grip element (34) is a grip bolt which is provided on the workpiece palette (19), protrudes at a side face (36, 37) of the workpiece palette (19) in the vicinity of the second edge (42) of the workpiece palette (19), and has a substantially cylindrical outer face for gripping by the gripper device (31).

13. Workpiece positioning device according to claim 11 or 12, wherein the gripper device (31) has a gripper arm (32) which is arranged on a carriage (26, 27; 57, 61) of one of the horizontal and vertical linear axes (23, 24) and has a gripper face (33) which is rounded at least in portions for receiving the grip element (34) of the workpiece palette (19) in such a fashion that it is rotatable with little play.

14. Workpiece positioning device according to claim 13, wherein the gripper device (31) furthermore has a stop block (35) which is formed on the carriage (26, 27; 57, 61) and arranged so as to come into contact with the workpiece palette (13) when it is pivoted into a vertical position.

15. Machining centre for machining workpieces which are clamped on a workpiece palette (19),
with a machining station (2) which has a machining spindle (11) mounted and guided movably on a machine bed (6),
with a loading station (13) for clamping workpieces (12) on a workpiece palette (19) and/or with a buffer station (14) for temporary intermediate storage of a workpiece palette (19) with workpiece (12) clamped thereon, and
with a workpiece positioning device (28) according to any of the preceding claims which is configured to convert a workpiece palette (19) with the workpiece (12) from a horizontal position to a vertical position or vice versa during transport between one of the loading station (13), the buffer station (14) and the machining station (2), and another of the stations (13, 14, 2).

16. Machining centre according to claim 15 which is a horizontal machining centre, in which the machining spindle (11) is held in a substantially horizontal position on a machine frame (9) and workpieces (12) are loaded onto the workpiece palette (19) in the horizontal position and machined in the vertical position.

17. Machining centre according to claim 15 or 16, which comprises both a loading station (13) with a repository (17) and a buffer station (14) with a repository (17), wherein the workpiece positioning device (28) is configured to deposit workpiece palettes (19) in the horizontal position on the respositories (17) of the loading station (13) and the buffer station (14), and transport them in the vertical position between the loading station (13), the buffer station (14) and the machining station (2).

18. Method for positioning a workpiece (12) clamped on a workpiece palette (19) in a machining centre (1) which comprises the following steps:
provision of a horizontal and a vertical linear axis (23, 24) for transport of a workpiece palette (19) in the vertical and horizontal direction (S1);
deposit of the workpiece palette (19) in the horizontal position on a repository (17) so that a first edge (41) of the workpiece palette (19) is received in rotatable fashion in a rotary bearing (44) (S2);
gripping of the workpiece palette (19) at another second edge (42) in a relatively rotatable fashion (S3);
simultaneous movement of the horizontal and vertical linear axes (23, 24) in order to pivot the workpiece palette (19) on an orbit (52) about the rotary bearing (44) in order to convert it from a horizontal position to a vertical position or vice versa;
lifting of the workpiece palette (19) from the rotary bearing (44) of the repository (17) or lowering of the workpiece palette (19) onto the rotary bearing (44) while the workpiece palette (19) is in the vertical position; and
transport of the workpiece palette (19) in the horizontal direction while the workpiece palette (19) is in the vertical position.

## Revendications

1. Dispositif de positionnement de pièces pour un centre d'usinage (1), en particulier un centre d'usinage horizontal, où des pièces (12) sont usinées dans le centre d'usinage (1) à l'état fixé sur une palette porte-pièce (19),
comprenant un élément de support (17) qui présente une surface de support (18) horizontale, destinée à une palette porte-pièce (19), et un palier rotatif (44) qui est conçu pour recevoir la palette porte-pièce (19) de façon rotative, sur un premier bord (41) de celle-ci, et
comprenant un dispositif de pivotement (53) destiné à déplacer une palette porte-pièce (19) d'une position horizontale dans une position verticale et inversement, le dispositif de pivotement (53) étant agencé pour saisir une palette porte-pièce (19) sur un autre bord, à savoir un deuxième bord (42), et pour faire pivoter le deuxième bord (42) de la palette porte-pièce (19) en suivant une trajectoire circulaire (52) autour du palier rotatif (44), par déplacement simultané d'un axe linéaire horizontal et d'un axe linéaire vertical (23, 24), afin de déposer la palette porte-pièce (19) en position horizontale sur l'élément de support (17), respectivement pour l'amener dans une position verticale, et
sachant que le dispositif de positionnement de pièces (28) est agencé pour soulever la palette porte-pièce (19), dans la position verticale de celle-ci, du palier rotatif (44) de l'élément de support (17), dans la direction verticale, au moyen de l'axe linéaire vertical (24), et de l'y déposer et de la transporter dans la direction horizontale au moyen de l'axe linéaire horizontal (23).

2. Dispositif de positionnement de pièces selon la revendication 1, dans lequel le dispositif de pivotement (53) est agencé pour faire pivoter la palette porte-pièce (19) d'un quart de cercle de 90° autour du palier rotatif (44), dans chaque sens de rotation.

3. Dispositif de positionnement de pièces selon la revendication 1 ou 2, dans lequel l'axe linéaire horizontal (23) présente un chariot horizontal (26 ; 57) qui est entraîné par un moteur et est conçu pour le chargement et le retrait de la palette porte-pièce (19) dans un poste d'usinage (2) du centre d'usinage (1), en direction de ce poste et dans la direction opposée, et dans lequel l'axe linéaire vertical (24) présente un chariot vertical (27 ; 61) qui est entraîné par un moteur et est conçu pour soulever ou abaisser une palette porte-pièce (19) dans la direction verticale.

4. Dispositif de positionnement de pièces selon l'une quelconque des revendications précédentes, dans lequel le mouvement des axes linéaires (23, 24) est commandé par une commande, en particulier une commande numérique par ordinateur (CNC), du centre d'usinage (1).

5. Dispositif de positionnement de pièces selon l'une quelconque des revendications précédentes, dans lequel les axes linéaires horizontal et vertical (23, 24) sont commandés de manière telle que la trajectoire de déplacement de l'un des axes linéaires (23, 24) suive dans le temps une fonction cosinus, tandis que la trajectoire de déplacement de l'autre axe linéaire (23, 24) suit dans le temps une fonction sinus.

6. Dispositif de positionnement de pièces selon l'une quelconque des revendications précédentes, dans lequel le palier rotatif (44) présente une mâchoire (46 ; 62) qui est disposée sur la surface de support (18) horizontale ou sur un côté de l'élément de support (17) et définit une surface d'appui tournant (49 ; 66) circulaire ou en forme de V.

7. Dispositif de positionnement de pièces selon la revendication 6, dans lequel la mâchoire (46) présente une première et une deuxième branche de mâchoire (47, 48) qui avancent à partir de la surface de support (18) horizontale et définissent entre elles la surface d'appui tournant (49), sachant que la deuxième branche de mâchoire (48) qui est plus proche d'un bord (51) de l'élément de support (17) avance plus loin à partir de la surface de support (18) horizontale que la première branche de mâchoire (47) qui est plus éloignée du bord (51) de l'élément de support (17).

8. Dispositif de positionnement de pièces selon l'une quelconque des revendications précédentes, qui présente en outre au moins un élément d'appui (43) qui est prévu sur une palette porte-pièce (19) et est respectivement conçu pour être placé avec possibilité de rotation et avec faible jeu dans l'un des paliers rotatifs (44).

9. Dispositif de positionnement de pièces selon la revendication 8, dans lequel l'élément d'appui (43), au nombre d'au moins un, est constitué d'une portion (45) en partie cylindrique, qui est réalisée sur un côté (38) d'une palette porte-pièce (19) contigu au premier bord (41), ou d'un tourillon (67) cylindrique qui fait saillie à partir d'une face latérale (36, 37) d'une palette porte-pièce (19), le diamètre extérieur de la portion (45) en partie cylindrique ou du tourillon (67) étant adapté aux dimensions intérieures d'une surface d'appui tournant (49, 66) du palier rotatif (44).

10. Dispositif de positionnement de pièces selon la revendication 8 ou 9, dans lequel deux ou plusieurs éléments d'appui (43) sont prévus à distance les uns des autres sur le premier bord (41) de la palette porte-pièce (19), et les paliers rotatifs (44) sont prévus en nombre correspondant à distance les uns des autres, sur un bord (51) de l'élément de support (17) qui est associé au premier bord (41) de la palette porte-pièce (19).

11. Dispositif de positionnement de pièces selon l'une quelconque des revendications précédentes, dans lequel la palette porte-pièce (19) comporte au moins un élément formant poignée (34), et le dispositif de pivotement (53) présente un moyen de préhension (31) qui est conçu pour saisir l'élément formant poignée (34) d'une manière qui autorise une rotation relative.

12. Dispositif de positionnement de pièces selon la revendication 11, dans lequel l'élément formant poignée (34), au nombre d'au moins un, est un axe formant poignée qui est prévu sur la palette porte-pièce (19) et qui fait saillie à partir d'une face latérale (36, 37) de la palette porte-pièce (19), à proximité du deuxième bord (42) de la palette porte-pièce (19), et présente une surface extérieure sensiblement cylindrique destinée à être saisie par le moyen de préhension (31).

13. Dispositif de positionnement de pièces selon la revendication 11 ou 12, dans lequel le moyen de préhension (31) présente un bras de préhension (32) qui est disposé sur un chariot (26, 27 ; 57, 61) de l'un des axes linéaires horizontal et vertical (23, 24) et comporte une surface de préhension (33) qui est arrondie au moins par portions et est destinée à recevoir avec faible jeu et avec possibilité de rotation l'élément formant poignée (34) de la palette porte-pièce (19).

14. Dispositif de positionnement de pièces selon la revendication 13, dans lequel le moyen de préhension (31) présente en outre un bloc de butée (35) qui est formé et disposé sur le chariot (26, 27 ; 57, 61), afin de venir en appui contre la palette porte-pièce (13) lors d'un pivotement de celle-ci dans une position verticale.

15. Centre d'usinage destiné à l'usinage de pièces qui sont fixées sur une palette porte-pièce (19),
comprenant un poste d'usinage (2) avec une broche d'usinage (11) qui est montée et guidée de façon mobile sur une table de machine (6) ;
comprenant un poste de montage (13) pour fixer des pièces (12) sur une palette porte-pièce (19) et/ou comprenant un poste tampon (14) pour le stockage temporaire d'une palette porte-pièce (19) sur laquelle est fixée une pièce (12), et
comprenant un dispositif de positionnement de pièces (28) selon l'une quelconque des revendications précédentes, qui est agencé pour déplacer une palette porte-pièce (19), avec la pièce (12), d'une position horizontale dans une position verticale ou inversement, pendant le transport entre un poste parmi le poste de montage (13), le poste tampon (14) et le poste d'usinage (2) et l'un des autres postes (13, 14, 2).

16. Centre d'usinage selon la revendication 15, qui est un centre d'usinage horizontal dans lequel la broche d'usinage (11) est montée dans une position sensiblement horizontale sur un bâti de machine (9), et des pièces (12), fixées sur la palette porte-pièce (19), sont chargées en position horizontale et usinées en position verticale.

17. Centre d'usinage selon la revendication 15 ou 16, qui présente aussi bien un poste de montage (13), doté d'un élément de support (17), qu'un poste tampon (14) doté d'un élément de support (17), le dispositif de positionnement de pièces (28) étant agencé pour déposer des palettes porte-pièce (19) en position horizontale sur les éléments de support (17) du poste de montage (13) et du poste tampon (14) et pour les transporter en position verticale entre le poste de montage (13), le poste tampon (14) et le poste d'usinage (2).

18. Procédé de positionnement d'une pièce (12), fixée sur une palette porte-pièce (19), dans un centre d'usinage (1), lequel procédé comprend les étapes suivantes :
mise en place d'un axe linéaire horizontal et d'un axe linéaire vertical (23, 24) en vue du transport d'une palette porte-pièce (19) dans les directions verticale et horizontale (S1) ;
dépôt de la palette porte-pièce (19) en position horizontale sur un élément de support (17), de sorte qu'un premier bord (41) de la palette porte-pièce (19) est placé avec possibilité de rotation dans un palier rotatif (44) ;
préhension de la palette porte-pièce (19) sur un autre bord, à savoir un deuxième bord (42), d'une façon permettant une rotation relative ;
déplacement simultané des axes linéaires horizontal et vertical (23, 24) pour faire pivoter (S4) la palette porte-pièce (19) sur une trajectoire circulaire (52) autour du palier rotatif (44), afin de l'amener d'une position horizontale dans une position verticale ou inversement.
soulèvement de la palette porte-pièce (19) du palier rotatif (44) de l'élément de support (17), ou abaissement de la palette porte-pièce (19) sur le palier rotatif (44), pendant que la palette porte-pièce (19) se trouve en position verticale, et
transport de la palette porte-pièce (19) dans la direction horizontale, pendant que la palette porte-pièce (19) est en position verticale.
